(19)

Europäisches Patentamt
European Patent Office
Office européen des brevets

(11)  **EP 2 657 842 B1**

(12)  **EUROPEAN PATENT SPECIFICATION**

(45) Date of publication and mention
of the grant of the patent:
**08.11.2017  Bulletin 2017/45**

(51) Int Cl.:
***G06F 9/50*** *(2006.01)*

(21) Application number: **12165144.2**

(22) Date of filing: **23.04.2012**

(54) **Workload optimization in a multi-processor system executing sparse-matrix vector multiplication**

Auslastungsoptimierung in einem Mehrfachprozessorsystem bei der Ausführung von dünnbesetzter Matrixvektormultiplikation

Optimisation de la charge de travail dans un système multiprocesseur exécutant une multiplication de vecteur de matrice rare

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.10.2013  Bulletin 2013/44**

(73) Proprietor: **FUJITSU LIMITED
Kawasaki-shi,
Kanagawa 211-8588 (JP)**

(72) Inventor: **GEORGESCU, Serban
London W5 3PL (GB)**

(74) Representative: **Hoffmann Eitle
Patent- und Rechtsanwälte PartmbB
Arabellastraße 30
81925 München (DE)**

(56) References cited:
  • LEE S ET AL: "Adaptive runtime tuning of parallel sparse matrix-vector multiplication on distributed memory systems", PROCEEDINGS OF THE INTERNATIONAL CONFERENCE ON SUPERCOMPUTING - ICS'08 - PROCEEDINGS OF THE 2008 ACM INTERNATIONAL CONFERENCE ON SUPERCOMPUTING 2008 ASSOCIATION FOR COMPUTING MACHINERY US, 2008, pages 195-204, XP002683769, DOI: DOI:10.1145/1375527.1375558

  • ALIN MURARA U ET AL: "Workload Balancing on Heterogeneous Systems: A Case Study of Sparse Grid Interpolation", EURO-PAR 2011: PARALLEL PROCESSING WORKSHOPS, SPRINGER BERLIN HEIDELBERG, BERLIN, HEIDELBERG, vol. 7156, 29 August 2011 (2011-08-29), pages 345-354, XP019175969, ISBN: 978-3-642-29739-7

  • ISMAEL GALINDO ET AL: "Dynamic Load Balancing on Dedicated Heterogeneous Systems", RECENT ADVANCES IN PARALLEL VIRTUAL MACHINE AND MESSAGE PASSING INTERFACE; [LECTURE NOTES IN COMPUTER SCIENCE], SPRINGER BERLIN HEIDELBERG, BERLIN, HEIDELBERG, vol. 5205, 7 September 2008 (2008-09-07), pages 64-74, XP019105776, ISBN: 978-3-540-87474-4

  • James Demmel ET AL: "CS 267: Applications of Parallel Computers - Graph Partitioning", , 11 February 2010 (2010-02-11), XP055326794, Retrieved from the Internet: URL:http://people.eecs.berkeley.edu/~demmel/cs267_Spr10/Lectures/lecture08_partition_jwdhds10.ppt [retrieved on 2016-12-07]

**Description**

[Technical Field]

The present invention relates to the field of multi-processor computer systems, particularly to the acceleration of Sparse-Matrix Vector Multiplication (SPMV) in such systems.

[Background]

In recent years, there has been a trend for computers, ranging from laptops to supercomputers, to offload more and more time-consuming computations to secondary processors in the form of hardware accelerators. Among these accelerators, graphic processors (GPUs), Field Programmable Gate Arrays (FPGAs) and the CELL Broadband Engine (CELL-BE) are some of the best known, although the term "accelerator" as used herein encompasses any processor that increases the computational capacity of a general-purpose CPU by performing one or more specific functions faster than is possible by implementing the function(s) in software running on the general-purpose CPU alone. In general, an accelerator may have a dedicated accelerator memory that is provided separately from the main system memory, for example in a discrete GPU or a FPGA board. Alternatively, the accelerator may share the system memory with the CPU, as in the case of an integrated GPU or FPGA directly connected to a CPU socket, for example. In a modern computer, one or more accelerators are usually connected via a fast data bus such as PCI Express (PCIe) to a CPU on the motherboard. Using this bus, the accelerators can transfer data between each other and to/from the CPU.

The use of such accelerator devices, although imposing an additional degree of complexity to application programmers, brings large increases in performance while reducing the physical footprint and power consumption. Today's accelerators usually achieve this by dispensing with many of the architectural optimizations present in CPUs (such as branch predictors, cache, prefetchers etc.), thereby making their hardware resources available for performing large amounts of arithmetic. As such, they have been providing most of the computational power for some of the fastest supercomputers available today.

Among other fields, accelerators have proven very effective in accelerating linear algebra operations, in particular the solving of systems of linear equations which are large and sparse. Such systems usually arise from the discretization of partial differential equations, and their solution by a matrix solver is very often the most time-consuming step of the analysis process.

A widely used class of matrix solvers for matrices that are large and sparse is the class of iterative solvers. These solvers take a matrix (referred to as the "system matrix") and a right-hand-side (RHS) vector as input and, after a (usually very large) number of iterations, output the solution of the matrix equations at the prescribed accuracy. These solvers, being both fast and memory efficient, are the usual choice for large-scale problems, in which the system matrix may be e.g. $10^6 \times 10^6$ in size for a typical application.

The most time-consuming and difficult to optimize part of such solvers is the Sparse-Matrix Vector Multiplication (SPMV) routine. Acceleration of SMPV is therefore highly desirable, particularly as this would benefit the many applications where sparse iterative solvers employing SPMV are used to solve systems of linear equations, for example simulation of physical systems such as electrical circuits, and so on. One particularly important such application is Computationally-Aided Engineering (CAE), a field that has became ubiquitous in industry. Most of the major commercial CAE packages available today have begun to take advantage of accelerator devices like the GPU to speed up SPMV operations, with average speedups of 3x over last generation CPUs being obtained. These speedups directly translate to faster turnaround times or the possibility to perform more detailed analyses, both of which contribute to the competitiveness of the product being manufactured. It should be noted, however, that SPMV routines are widely used not only in CAE but also in a diverse range of other applications including optimization algorithms, artificial intelligence (AI) and many more.

Efforts to accelerate SPMV have so far focused on optimising the performance of hardware accelerators to which the task of executing these operations is often delegated. Examples of such optimizations include register blocking optimizations for reducing the amount of indirection required when accessing matrix elements, software prefetching of required portions of the source vector (if something of the sparsity structure of the matrix is known), and matrix reordering optimizations. Yet, despite these efforts, there still remains a great demand for speeding up the execution of SPMV in multi-processor systems, particularly in view of its use in a very diverse range of applications.

The article titled "Adaptive Runtime Tuning of Parallel Sparse Matrix-Vector Multiplication on Distributed Memory Systems" by S. Lee and R. Eigenmann, Proceedings of the 2008 ACM International Conference on Supercomputing, pages 195-204, discloses adaptive runtime tuning mechanisms to improve the parallel performance on distributed memory systems. The adaptive iteration-to-process mapping mechanism balances computational load at runtime with negligible overhead (1% on average), and the described runtime communication selection algorithm searches for the best communication method for a given data distribution and mapping.

More specifically, this article discloses a dynamic runtime mapping mechanism called normalized row-execution-time-based iteration-to-process mapping. In the proposed algorithm, row-to-process mapping is performed at runtime, based on the execution time of each row. The optimization goal of the mapping algorithm is to find the best row-to-process mapping, such that measured SpMV computation times are as even as possible among processes. The basic approach to achieve this goal is as follows: initially rows are block-distributed evenly among processes and each process measures the execution time of each assigned row. The row-execution times are exchanged among processes in an all-to-all manner. The rows are block-distributed again, but inter-process boundaries are adjusted, such that each process has similar row-block-execution time, which is the sum of execution times of rows mapped to the same process. Due to the runtime performance difference, the execution times of the same row may differ on different processes. Therefore, the execution time of each row is measured again. This measure-and-map procedure is repeated until the difference of row-block-execution times are within some threshold. Measuring and exchanging each row execution time may incur large measuring and communication overhead. To minimize the incurred overheads, each row execution time is approximated. At every outermost-loop iteration, which corresponds to one computation of SpMV multiplication, every process measures net computation time consumed to calculate row blocks assigned to the process. Normalized row execution time (NRET) is the measured time divided by the number of assigned rows. In this approximation, each row assigned to one process has identical execution time regardless of the number of non-zeros contained in the row. To increase accuracy, the row execution time is recalculated whenever the row-to-process mapping is changed, and the newly estimated value is used for the next re-mapping. The document titled "CS 267: Applications of Parallel Computers - Graph Partitioning" by James Demmel provides an overview of graph partitioning algorithms and their application to sparse matrix multiplication.

[Summary of the Invention]

The present invention provides a method as set out in claim 1, a workload distribution controller as set out in claim 7, a data processing system as set out in claim 13, and a computer-readable storage medium as set out in claim 14. Optional features are set out in the remaining claims.

[Brief Description of the Drawings]

Embodiments of the invention will now be explained by way of example only, in detail, with reference to the accompanying figures, in which:

Fig. 1 is a schematic showing a data processing system in the form of a computer cluster according to an embodiment of the present invention;

Fig. 2 shows the components of the workload distribution controller shown in Fig. 1;

Fig. 3 shows an example of computer hardware that can be programmed to provide the functionality of the workload distribution controller shown in Fig. 2;

Fig. 4 is a flow chart illustrating the operation of the data processing system of Fig. 1 as a sparse iterative solver to solve a system of sparse linear equations;

Fig. 5 is a flow chart illustrating the processing operations of the workload distribution controller shown in Fig. 2 to optimize the workload distribution in step S30 of Fig. 4, in accordance with a first embodiment of the invention;

Fig. 6 is a flow chart illustrating the processing operations of the workload distribution controller shown in Fig. 2 to optimize the workload distribution in step S30 of Fig. 4, in accordance with a second embodiment of the invention;

Fig. 7 shows simulation data obtained for a first test scenario described herein, in which the performance of a data processing system according to an embodiment of the present invention is compared with a conventional SPMV implementation; and

Fig. 8 shows simulation data obtained for a second test scenario described herein, in which the performance of a data processing system according to an embodiment of the present invention is compared with a conventional SPMV implementation.

[Detailed Description of Embodiments]

The present inventor has realised that, while the computing power of a processor (such as a general-purpose CPU) tasked with executing SPMV may be supplemented to a large extent by a secondary processor (such another CPU or an accelerator, to which various optimizations may be made, as noted above), marked improvements in the efficiency with which SPMV can be executed by such a multi-processor system as a whole can be achieved by shifting the focus to the distribution of the workload between the processors, specifically by providing a load-balanced distribution of the workload while preferably minimizing communication between the processors.

However, the inventor has found that achieving load-balanced SMPV processing is a difficult task in practice because, in general, the performance and the communication pattern strongly depend on the hardware the application is being run on, the data structures being used and the specific type of problem that is being solved, among other factors. An efficient workload distribution is therefore difficult to achieve without correctly accounting for all of these factors, which requires an in-depth understanding of the application and the specific hardware being used.

Nevertheless, the present inventor has found an effective solution to this problem that provides a general and automatic way of efficiently exploiting the resources of multi-processor systems, particularly the accelerators and the CPUs present in computers and clusters of computers, which is capable of greatly increasing the performance of a wide range of applications, including those employing sparse iterative solvers (e.g. CAE) and many others in the fields of scientific and engineering computing, and information retrieval.

More specifically, there is described in the following a method of controlling a distribution, between a first processor and a second processor, of a workload in multiplying a sparse matrix by a vector using an SPMV routine executed by each of the processors. The method comprises determining a first execution time and a second execution time indicative of times taken by the first and second processors, respectively, to execute the SPMV routine using the vector and at least some of the rows of the sparse matrix. Based on the determined first and second execution times, respective total numbers of the rows of the sparse matrix that are to be multiplied with the vector by the first and second processors are calculated such that the time taken by the first processor to execute the SPMV routine using its respective total number of rows of the sparse matrix is substantially equal to a time comprising the time taken by the second processor to execute the SPMV routine using its respective total number of rows of the sparse matrix. Then, based on the calculated numbers of rows, respective rows of the sparse matrix are assigned to the first and second processors for multiplication by the vector.

There is also described a computer program product, comprising a computer-readable storage medium or a signal, carrying computer program instructions which, when executed by a processor, cause the processor to perform a method as set out above.

Thus, in an embodiment of the present invention in which the first and second processors repeatedly execute the SPMV routine (for example, during execution of a sparse iterative solver), the respective times taken by the processors to execute a set of operations that are to be repeated in the computational task ahead (namely, the times taken to execute SPMV operations on the particular system matrix, or a portion thereof, and the vector defining the problem at hand) are benchmarked. In other words, the performance of the processors is benchmarked using data and the operations thereon that are actually employed during execution of the SMPV routine that is called upon by the solver or other application making use of SPMV routine. In essence, a "test run" is performed at the start of the application employing SPMV (and optionally at one or more times during its execution) in order to gauge the performance of the processors under realistic conditions.

The workload is then optimally distributed between the processors for subsequent operation by assigning, on the basis of the benchmarking results, respective numbers of rows of the matrix to the first and second processors for processing. For this assignment, the numbers of rows may be calculated such that the time taken by the first processor to execute the SPMV routine using its respective total number of rows of the sparse matrix. In a multi-processor system where the communication time between the processors is small (for example, in the case of an accelerator and a CPU sharing the system memory of a computer), this method of controlling the workload distribution allows optimal load balancing to be achieved.

The present inventor has also recognised that, in some practical multi-processor systems of interest, the latency of the communication channel via which the processors communicate (be it one or more data buses, a network, a combination thereof, or any other kind of communication link) can be a significant factor that needs to be taken into consideration when apportioning the respective numbers of matrix rows to the first and second processors.

Thus, in a preferred embodiment, a communication time indicative of a time required to communicate data for the SPMV routine (e.g. SPMV processing results) between the first and second processors via the communication channel is determined, preferably using a communication table which defines the communication pattern, and the respective total numbers of the rows of the sparse matrix that are to be multiplied with the vector by the first and second processors are calculated, based on the determined first and second execution times and the determined communication time, such that the time taken by the first processor to execute the SPMV routine using its respective total number of rows of the sparse matrix is substantially equal to the sum of the time taken by the second processor to execute the SPMV routine using its respective total number of rows of the sparse matrix and a communication time required to communicate, between the first and second processors, data including results of the executions of the SPMV routine.

As will be demonstrated below, this load-balancing procedure can speed up a typical SPMV implementation considerably, by a factor of 1.5 or so. Furthermore, since the workload between the processors is distributed dynamically using benchmarks rather than statically using a performance model, the user does not need to acquire any specialist knowledge of the hardware running the application, the data structures being used, the specific type of problem that is being solved, etc., which makes the method widely applicable and straightforward to implement.

There is also described herein a workload distribution controller for controlling a distribution, between a first processor and a second processor, of a workload in multiplying a sparse matrix by a vector using an SPMV routine executed by each of the processors. The workload distribution controller comprises a benchmarking module arranged to determine a first execution time and a second execution time indicative of times taken by the first and second processors, respectively, to execute the SPMV routine using the vector and at least some of the rows of the sparse matrix. The workload distribution controller further comprises a workload distribution calculator which is arranged to calculate, based on the determined first and second execution times, respective total numbers of the rows of the sparse matrix that are to be multiplied with the vector by the first and second processors such that the time taken by the first processor to execute the SPMV routine using its respective total number of rows of the sparse matrix is substantially equal to a time comprising the time taken by the second processor to execute the SPMV routine using its respective total number of rows of the sparse matrix. The workload distribution controller also includes a matrix row assignment module which is operable to assign, based on the calculated numbers of rows, respective rows of the sparse matrix to the first and second processors for multiplication by the vector.

The workload distribution controller may be part of the first processor or the second processor, or it may be separate therefrom.

There is also described in the following a data processing system comprising a first processor and a second processor each arranged to execute an SPMV routine, the processors being arranged to communicate with each other via a communication channel. The data processing system also includes a workload distribution controller as set out above, which is arranged to control the distribution, between the first processor and second processor, of the workload in multiplying the sparse matrix by the vector using the SPMV routine executed by each of the processors.

Embodiments of the present invention will now be described using computationally-aided engineering (CAE) as an example application as this imposes stringent demands on the SPMV processing. It will, however, be appreciated that the present invention is not limited to use in CAE and can also be used in many other applications.

[First Embodiment]

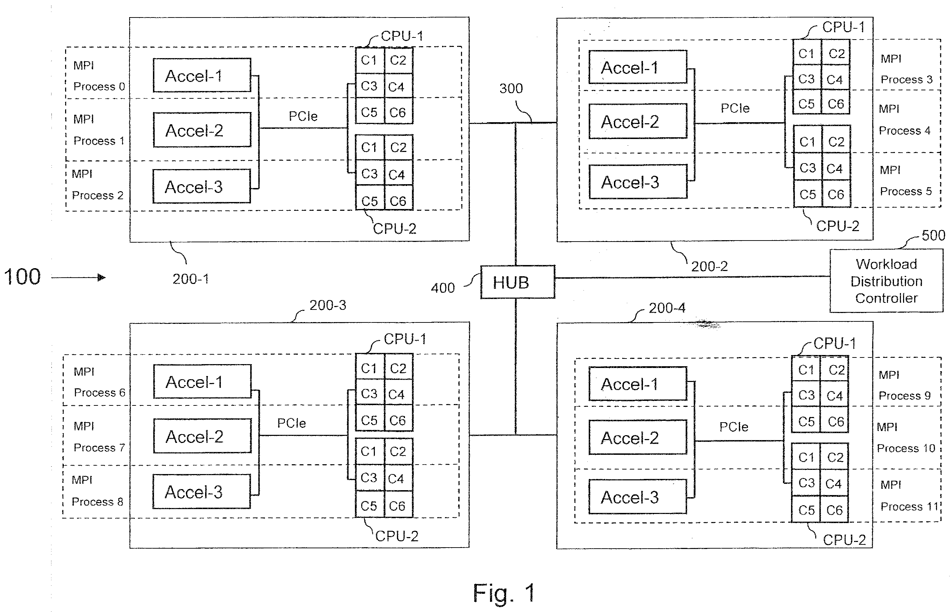

Figure 1 is a schematic block diagram showing a data processing system according to an embodiment of the present invention, which comprises a high-performance computer (HPC) cluster 100. The term "cluster" as used herein takes its usual meaning of a parallel or distributed system having a collection of interconnected computers, which constitutes a single, unified computing resource. For ease of explanation, the HPC cluster 100 shown in Fig. 1 has four nodes 200-1 to 200-4, although it will be appreciated that the cluster 100 may in general have a different number of nodes that will depend on the specific user requirements.

As shown in Fig. 1, the nodes 200-1 to 200-4 are interconnected via a Star topology Infiniband network 300 having a central hub 400. However, this kind of network is given by way of example only and it will be appreciated that the concepts described herein are equally applicable to other cluster topologies (e.g. Tree, Mesh, Torus, Butterfly etc.), which may employ interconnects other than Infiniband, such as GigE or 10GigE, or any combination of such known interconnect types. For example, a Fat-Tree topology may be well suited to some applications, which features higher-speed links near the tree root than elsewhere in the network.

In the present embodiment, each of the nodes 200-1 to 200-4 of the cluster 100 is assumed to have two multi-core CPUs, CPU-1 and CPU-2, with each of these CPUs having six processor cores, C1-C6. Each node also has three accelerators, Accel-1 to Accel-3, which are operationally connected with the CPUs via an internal communication channel, for example, in the form of an interconnect bus (PCIe in the present example) so as to be capable of exchanging data therebetween. One or more of the nodes 200-1 to 200-4 may additionally have other conventional components, including peripherals such as a display, keyboard etc. which are not shown in Fig. 1 for sake of clarity. It is noted that the numbers of CPUs, CPU cores and accelerators present in each node are given by way of example only, in order to facilitate understanding of the present invention, and are not intended to limit the scope of any of the appended claims. Although all of the nodes 200-1 to 200-4 of the present embodiment have the same number of accelerators and CPUs, with there being no difference between the accelerators and between the CPUs in each node, as illustrated in Fig. 1, these constraints are relaxed in the other embodiments that are described below.

The computer cluster 100 of the present embodiment is configured to execute, as part of a CAE computer program running on the cluster 100, a sparse iterative solver routine to iteratively solve a system of sparse linear equations in a finite element analysis (FEA) calculation. In the present embodiment, the FEA calculation uses a model of multiple objects having mechanical contact therebetween, as may be employed in stress analysis simulations for consumer products, for example. In general, a FEA for CAE begins with a Computer-Aided Design (CAD) model. Next, boundary conditions are set and a finite element mesh is generated. Using mesh information, boundary conditions and material properties, a system matrix is constructed and stored using a suitable data format. This system matrix is then solved using a matrix solver to obtain the results of the analysis.

During execution of the sparse iterative solver routine, the cluster 100 is configured to perform SPMV operations on the system matrix. As will be explained further below, this process begins by partitioning the system matrix into sets of rows and allocating the processing of each set of rows to a respective Message Passing Interface (MPI) process within the cluster 100. As illustrated in Fig. 1, each of the MPI processes is mapped to a respective accelerator and a number of cores of the multi-core CPU within a node. In the present embodiment, the hardware resources mapped to each MPI process are the same, namely one accelerator and four CPU cores. Thus, there are three MPI processes for each of the nodes 200-1 to 200-4, with the CPU cores being uniformly distributed among the MPI processes within each node. For example, in the case of node 200-1 shown in Fig. 1, MPI process "0" is associated with accelerator Accel-1 and cores C1 to C4 of CPU-1, MPI process "1" is associated with accelerator Accel-1 and cores C5 and C6 of CPU-1 and cores C1 and C2 of CPU-2, and MPI process "2" is associated with accelerator Accel-1 and cores C3 to C6 of CPU-2. However, more generally, each MPI process may be mapped to an accelerator and either a CPU (single- or multi-core) or one or more cores of a multi-core CPU, which may or may not reside in a common node.

In the present embodiment, a distributed memory model (e.g. MPI) is used at the cluster level and a shared memory model (e.g. OPENMP or Intel® TBB) is used inside each MPI process. However, the entire system may alternatively be used as a SMP using virtualization technologies (e.g. ScaleMP) or a distributed memory model (e.g. flat MPI) may be used throughout, or anything in between.

Data involved in the FEA computation (including the system matrix rows as well as the RHS and solution vectors) may initially be located in the shared memory of the CPUs CPU-1 and CPU-2 within each node (hereafter referred to as the "host memory") or in the memories of the accelerators Accel-1 to Accel-3 therein (each referred to as an "accelerator memory"). The matrix stored in host memory is stored using a data format that allows efficient computation on the CPU. This format is referred to herein as "CPU-format". Examples of CPU formats are the Compressed Sparse Row (CSR) or Blocked Compressed Sparse Row (BCSR) format. The data stored in accelerator memory is stored in a data format that enables efficient computation on the accelerators. This format will hereafter be referred to as "accelerator-format". Examples of accelerator formats include the ELLPACK and Hybrid formats.

In FEA calculations using a model of multiple objects having mechanical contact therebetween, additional entries need to be added to the system matrix (in this case, the global stiffness matrix) in order to enforce the contact boundary conditions. However, the data formats usually used for storing the system matrix have the drawback of the addition of new elements being extremely inefficient. One work-around that is often used in FEA codes is to store these new elements in a different matrix, widely referred to as the "contact matrix", using a flexible data format.

Recognizing that the usually small size of the contact matrix and the flexible format being used make it unsuitable for computation by the accelerators Accel-1 to Accel-3, the present inventor has devised a processing scheme which addresses the computational inefficiencies that arise when processing the contact matrix in the conventional manner. Details of the way in which the contact matrix is processed in the present embodiment are provided below.

The initial allocation of the sets of rows of the system matrix and of the contact matrix to the MPI processes, and the distribution, between the accelerator and the CPU cores within each MPI process, of the workload in processing the allocated matrix rows using SPMV is controlled by a workload distribution controller 500, which is also shown in Fig. 1.

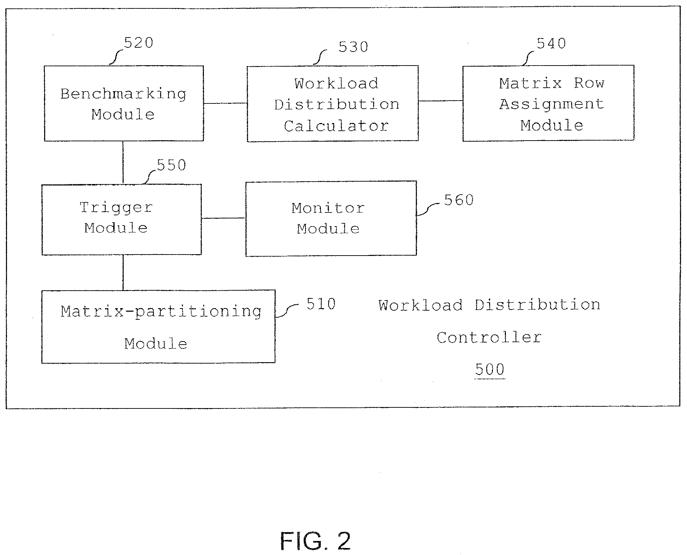

The functional components of the workload distribution controller 500 are illustrated in Fig. 2. As shown in Fig. 2, the workload distribution controller 500 includes a matrix-partitioning module 510 (although it should be noted that this component is optional), a benchmarking module 520, a workload distribution calculator 530, a matrix row assignment module 540, and preferably also a monitor module 550 and a trigger module 560. The processes performed by these components and the interactions therebetween that provide the functionality of the workload distribution controller 500 will be described in the following.

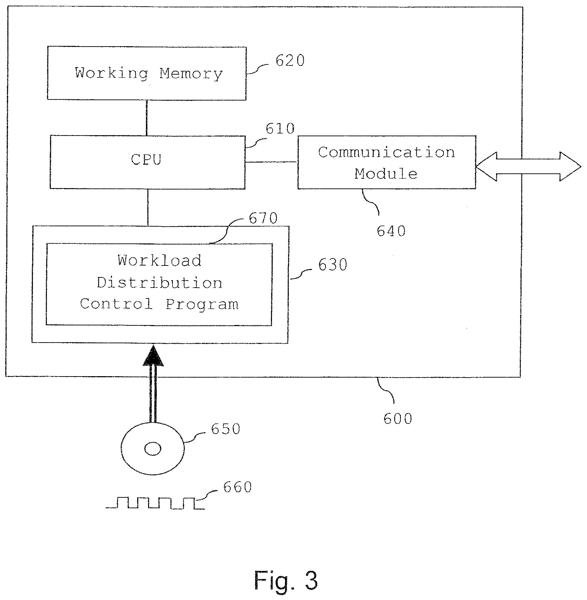

In the present embodiment, the workload distribution controller 500 is implemented in the programmable data processing apparatus 600 illustrated in Fig. 3, which comprises a CPU 610, a working memory 620, an instruction store 630 and a communication module 640, which are operationally connected to each other as shown in Fig. 3.

The instruction store 630 is a data storage device which may comprise a non-volatile memory, for example in the form of a ROM, a magnetic computer storage device (e.g. a hard disk) or an optical disc, which is pre-loaded with computer-readable instructions. Alternatively, the instruction store 630 may comprise a volatile memory (e.g. DRAM or SRAM) capable of storing computer-readable instructions that are transferred thereto from a computer program product, such as a computer-readable storage medium 650 (e.g. an optical disc such as a CD-ROM, DVD-ROM etc.) or a computer-readable signal 660 carrying the computer-readable instructions. The working memory 620 functions to temporarily store data to support the processing operations executed in accordance with the processing logic stored in the instruction store 630.

As also shown in Fig. 3, the instruction store 630 stores computer readable instructions including workload distribution control software 670, which may form at least a part of a computer program, module, object or sequence of instructions executable by the CPU 610. The workload distribution control software 670, when executed by the CPU 610, causes the CPU 610 to function as a workload distribution controller 500 (as shown in Fig. 2) in optimizing the distribution, between the accelerator and the CPU cores in each of the MPI processes, of the workload in multiplying the allocated rows of the system matrix by the vector using an SPMV routine executed by the accelerator and the cores within each MPI process.

The communication module 640 provides an interface between the CPU 610 and the network 300 interconnecting the nodes 200-1 to 200-4 of the cluster 100, and allows the workload distribution controller 500 to communicate with each of the nodes 200-1 to 200-4 in order to issue instructions to the nodes 200-1 to 200-4 for the benchmarking processes described below and for controlling the workload distribution within the MPI processes, and to receive information including the benchmarking results.

Although in this embodiment the workload distribution controller 500 is implemented in the programmable data processing apparatus 600 shown in Fig. 3, the workload distribution controller 500 may alternatively be implemented in hardware that is dedicated to performing the load-balancing operations, such as an appropriately configured FPGA. In either case, the workload distribution controller 500 may be manufactured and sold as a separate unit. The functionality of the workload distribution controller 500 may, of course, alternatively be provided by suitable software that may be loaded from a computer-readable storage medium 650 or provided via a computer-readable signal 650 to run on one or more of the nodes 200-1 to 200-4 of the cluster 100.

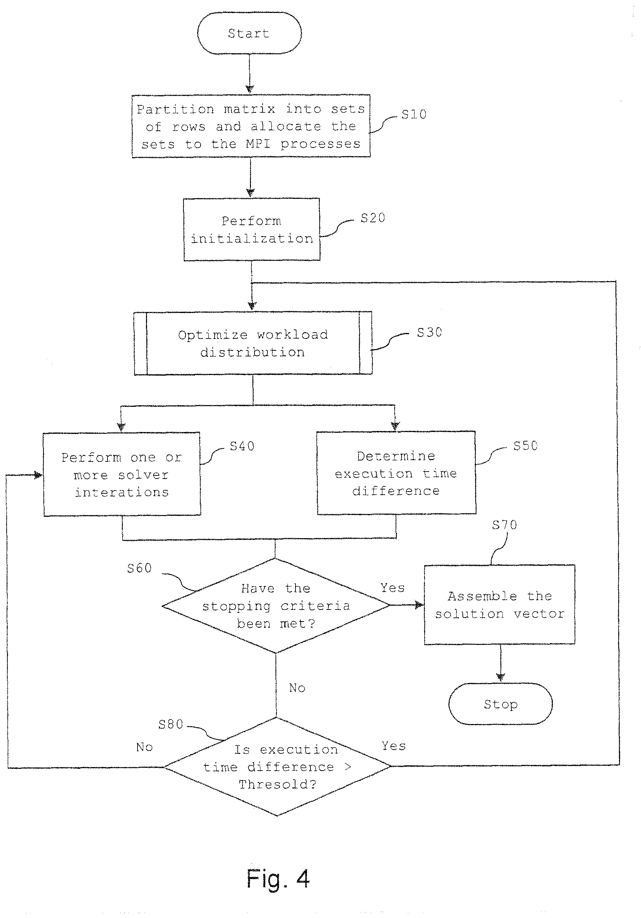

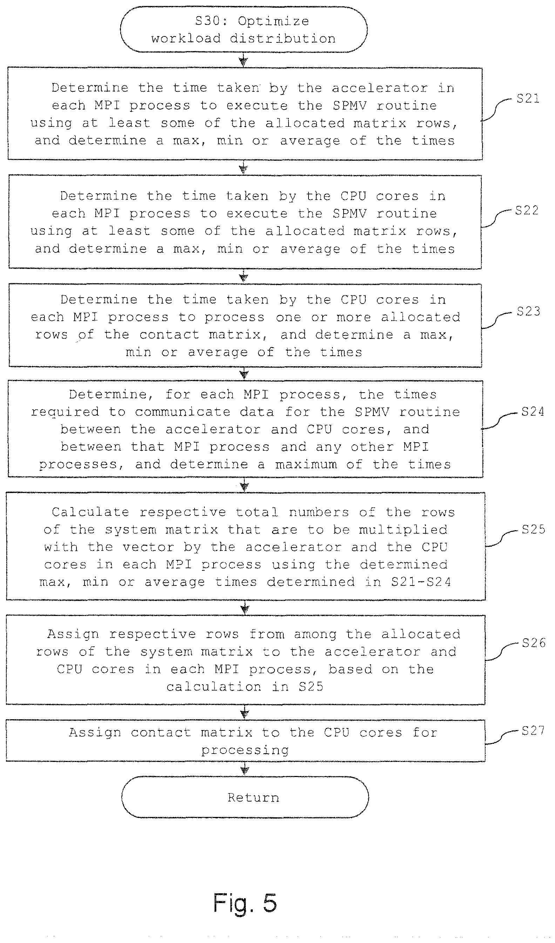

The operations performed by the cluster 100 to solve the system of sparse linear equations in the present embodiment, and the processes performed by the workload distribution controller 500 to optimize the distribution of the workload between the accelerator and the associated CPU cores within each MPI process during these operations, will now be described with reference to Figs. 4 and 5.

Figure 4 is a flow chart illustrating the operation of the cluster 100 of the present embodiment during its performance of the FEA computation discussed above.

The process begins with step S10, in which the matrix-partitioning module 510 partitions the system matrix into sets of rows and allocates the multiplication of each set of rows by the vector using SPMV to a respective one of the MPI processes "0" to "11". In the present embodiment, since the processing resources mapped to each of the MPI processes are identical, the system matrix is partitioned into 12 equal portions and these portions are allocated to the respective MPI processes "0" to "11" running in the cluster 100, to be processed in parallel. It should be noted that this partitioning scheme is generally applicable to scenarios in which all of the MPI processes are mapped to identical processing resources within the cluster so that the nodes themselves need not be identical. For example, the multiprocessor system 100 of Fig. 1 could be modified, without affecting the workload optimization scheme described herein, by replacing one of the nodes with two separate nodes, the first of these nodes having an accelerator connected to a four-core CPU to support one MPI process, and the second node having two accelerators each configured to interact with four cores of an eight-core CPU provided in the second node, with each accelerator/CPU core combination in the second node being mapped to a separate MPI process.

The allocation of the sets of rows may be effected in any desirable way, for example by the workload distribution controller 500 generating, for each MPI process, an array of indices identifying the rows of the complete system matrix that is stored in the CPU or accelerator memory of each of the nodes, which rows are to be processed by the accelerator and CPU cores associated with that MPI process. Alternatively, in order to avoid the storage of redundant information on the cluster nodes 200-1 to 200-4, the workload distribution controller 500 may issue instructions for causing one of the nodes 200-1 to 200-4 (or another computer which is external to the cluster 100), on which the complete system matrix is stored, to transmit copies of only the rows allocated to each MPI process to the respective nodes on which those MPI processes run.

The contact matrix is similarly partitioned and the sets of rows allocated to respective MPI processes for processing in the manner described below.

Then, in step S20, an initialisation process is performed by the workload distribution controller 500, during which it is ensured that, for each MPI process, data comprising the allocated rows of the system matrix, the RHS vector and solver parameters made available to both the accelerator and the CPU cores associated with that MPI process. In general, this data will be located in the host memory of a node, having been placed there in step S10. In this case, for each of the MPI processes, the data is copied from the relevant host memory to the relevant accelerator memory, e.g. in the case of MPI process "0", the relevant data is copied from the host memory accessible to cores C1 to C4 to the memory of accelerator Accel-1, and so on. During this process, the format of the system matrix rows is changed from a CPU-format to an accelerator-format, and the matrix rows in accelerator-format are then copied from host memory to the accelerator memory. In step S20, the RHS vector is also copied from the relevant host memory to relevant accelerator memory.

Alternatively, following step S10, the above-mentioned data may initially reside in the accelerator memories. In this case, for each MPI process, the allocated matrix rows in accelerator-format are copied from the accelerator memory of the accelerator mapped to that MPI process to the host memory accessible by the CPU cores mapped to that MPI process, and the format is then changed from an accelerator-format to a CPU-format. In this variant, the RHS vector is also copied from accelerator memory to host memory in step S20. However, in either case, the data format conversions and the copying operations performed in each MPI process may proceed in parallel to those performed in other MPI processes.

Then, in step S30, a process is performed to optimize the workload distribution between the accelerator and the CPU cores within each MPI process. These optimizations are preferably performed in parallel for all the MPI processes. As will be explained in detail later, for each MPI process, the result of the optimization process is the assignment, by the matrix row assignment module 540, of respective rows to the accelerator and the CPU cores from among the rows allocated to the MPI process at step S10. Thus, some of the matrix rows allocated to each MPI process (for example, MPI process "0") in step S10 are assigned to the accelerator associated with that process (which, in this example, would be Accel-1) and the remainder to the CPU cores associated with that process (in this example, CPU cores C1 to C4). The assignment may be performed by the matrix row assignment module 540 providing the solver with information (e.g. in the form of an array of indices) identifying the allocated rows of the system matrix that are to be processed by the accelerator, and the rows to be processed by the CPU cores. Using this information, the accelerator and the CPU cores are each able to restrict the SMPV operations they perform to the matrix rows that have been respectively assigned to them in step S30. As explained below, this division of the workload in processing the system matrix is based on performance figures obtained from certain benchmarking processes and leads to an efficient utilization of the processing power available in the cluster 100.

In step S40, for all of the MPI processes, in parallel, the CPU cores and the accelerators, functioning in accordance with the CAE program running on the cluster 100, execute one or more solver iterations using the rows of the system matrix that have respectively been assigned to them by the matrix row assignment module 540.

Thus, in step S40, for all of the MPI processes, in parallel, the CPU cores execute one or more solver iterations using the rows of the system matrix that have been assigned to them by the matrix row assignment module 540. This task is performed by the cores in each MPI process functioning in an SMP manner. Prior to execution of these solver iterations, within each MPI process, results of any previous iterations that are stored in the accelerator memory are copied to the host memory, as necessary, and Halo exchange may be performed to exchange between accelerators (either in the same node or different nodes) any data that is missing from the source vector.

As noted above, in the present embodiment, the matrix row assignment module 540 assigns to the CPU cores of one or more MPI processes the task of performing SPMV using the contact matrix, which the CPU cores duly carry out in step S40. The results of these operations are then added to the results of executing the one or more solver iterations using the rows of the system matrix that have been assigned to those CPU cores, as described above.

Concurrently with the above-described operations performed by the CPU cores in step S40, the accelerator in each MPI process executes a corresponding number of solver iterations using the rows of the system matrix that have been assigned to it by the matrix row assignment module 540, with a results vector being communicated from the CPU cores to the accelerator of the same MPI process after each iteration. Thus, SPMV and other necessary solver operations (e.g. the dot product) are performed in step S40.

Concurrently with step S40, the monitor module 560 of the workload distribution controller 500 determines in step S50, for at least one MPI process, the difference between the time taken by the accelerator to execute the SPMV routine using the rows of the system matrix assigned thereto and the sum of the time taken by the CPU cores to execute the SPMV routine using the rows of the system matrix assigned to them, the time taken by the CPU cores to execute the SPMV routine using the rows of the contact matrix assigned to them, and the communication time comprising the time required to communicate results of executing the SPMV routine by the CPU cores to the accelerator. On the other hand, in embodiments where the communication time is negligibly small, the monitor module 560 instead determines in step S50, for at least one MPI process, the difference between the time taken by the accelerator to execute the SPMV routine using the rows of the system matrix assigned thereto and the time taken by the CPU cores to execute the SPMV routine using the rows of the system matrix assigned to them. In either case, the determined value of this difference (or an average (e.g. mean) of two or more such difference values which have been obtained by timing several solver iterations) is stored by the workload distribution controller 500.

In step S60, the solver routine determines whether stopping criteria for ending the iterative solving loop have been satisfied. These criteria may take any desirable form and may, for example, specify the maximum number of iterations to be performed or the required degree of convergence that is to be achieved before the solution is returned.

If the solver determines that the stopping criteria have been satisfied, it makes the solution vector available in the accelerator memories at step S70 and then ceases operation. In each MPI process, the computed solution is made available in the accelerator memory because the accelerator, having greater processing power than the associated CPU cores in the present embodiment and having therefore been assigned a greater proportion of the SPMV computations to perform, will have the majority of the SPMV processing results stored in its memory at the end of these computations. These results can therefore be supplemented with the smaller set of results from the system memory used by the CPU cores with less communication than would be required in the opposite case, where the processing results are made available in the host memory instead.

If, on the other hand, the solver determines at step S60 that the stopping criteria have not yet been satisfied, the process proceeds to step S80, at which the trigger module 550 compares the difference value determined by the monitor module 560 in step S50 with a threshold value. The threshold value may, for example, be a percentage (for example, in the range of 5-10 per cent) of the value representing the time taken by the accelerator to execute the SPMV routine using the rows of the system matrix assigned thereto by the matrix row assignment module 540 in step S30 (which is described below). If the difference value is determined in step S80 to have exceeded the threshold value, then the process returns to step S30, in which the workload distribution controller 500 re-optimizes the workload distribution between the CPU cores and the accelerator in each MPI process such that the difference value subsequently determined by the monitor module 560 (in a repeat of step S50) falls below the threshold value.

It is to be noted that instead of the monitor module 560 and the trigger module 550 being provided as part of the workload distribution controller 500 to cause the optimization process of step S30 to be repeated in the manner described above, monitor module 560 and trigger module 550 could be omitted and the workload distribution controller 500 could alternatively be configured to repeat the optimization process of step S30 after each execution of the one or more solver iterations in step S40, or after execution of a predetermined number of repetitions of steps S40 and S60. In a yet further alternative, the optimization process of step S30 could be repeated at prescribed time intervals. However, the triggering of the above-described optimization process by the trigger module 550 (on the basis of the information provided thereto by the monitor module 560) has the advantage of being performed only when the workload distribution between the accelerator and the CPU cores in at least one MPI process is not sufficiently balanced and therefore needs to be optimized, such that unnecessary execution of the optimization process of step S30 (and the associated processing and time overheads) can be avoided.

The operations performed by the workload distribution controller 500 at step S30 in Fig. 4 will now be described in further detail with reference to Fig. 5.

As an initial point, it is noted that, for each MPI process, workload distribution controller 500 has access to both copies of the system matrix (one in CPU-format and residing in the host memory and the other in accelerator-format and residing in accelerator memory), both copies of the RHS vector (one residing in host memory and the other residing in accelerator memory) and a communication table identifying the data elements that are to be copied from a current MPI process to neighboring MPI processes.

By way of an overview, a set of benchmarking processes are initially performed using data and the operations thereon (including intra-node and any inter-node communication that might be required) that are actually employed during execution of the SMPV routine employed by the solver, with the benchmarking module determining a set of execution and communication times in steps S21 to S24 of Fig. 5. Using these benchmarks, the workload distribution calculator 530 calculates an optimal workload distribution for the MPI processes in step S25, on the basis of which the matrix row assignment module 540 assigns matrix rows to the accelerator and CPU cores within each of the MPI processes in step S26, with the contact matrix rows allocated to each MPI process being assigned to the respective CPU cores for processing in step S27.

Referring to Fig. 5, in step S21, the benchmarking module 520 benchmarks the performance of the SPMV routine for the accelerator in each MPI process (i.e. Accel-1, Accel-2 or Accel-3, as the case may be), by determining the time taken by the accelerator to execute the SPMV routine using the local part of the RHS vector and at least some of the rows of the system matrix allocated to that MPI process in step S10. More specifically, the benchmarking module 520 determines the average time $T_{Accel,SPMV,rowi}$ that it takes the accelerator in MPI process "i" (where i = 0,...,11 in the present embodiment) to multiply a row of the system matrix with the RHS vector. This is done by timing the multiplication, preferably for more than one row in order to obtain a better estimate, to obtain a measured execution time $T_{Accel,SMPVi}$. The execution time per row for the $i^{th}$ MPI process, $T_{Accel,SPMV,rowi}$, is then calculated as $T_{Accel,SMPVi}/N_i$, where $N_i$ is the number of rows used to determine $T_{Accel,SMPVi}$. Once the performance of the accelerators in all of the MPI processes has been benchmarked in this way, the benchmarking module 520 determines a so-called first execution time by selecting a maximum of the determined execution times $T_{Accel,SPMV,rowi}$. In the present embodiment, the maximum of the determined execution times $T_{Accel,SPMV,rowi}$ is selected because the accelerator computing phase (during which all of the accelerators in the cluster process their part of the rows, in parallel) finishes when the slowest accelerator completes its computations. However, in some cases, it may be preferable to determine the first execution time by instead calculating an average (e.g. mean) of the determined execution times $T_{Accel,SPMV,rowi}$, since the average execution time may provide a more robust alternative to the maximum execution time. For example, in the unlikely event of one of the accelerators performing the calculation slower than the other accelerators, the impact this event will have on the maximum of the determined execution times will be much bigger than on an average of the determined execution times. As a further alternative, the benchmarking module 520 may determine the first execution time by selecting a minimum of the determined execution times $T_{Accel,SPMV,rowi}$.

In step S22, the benchmarking module 520 benchmarks the performance of the SPMV routine for the four CPU cores in each MPI process, by determining the time taken by the cores to execute the SPMV routine using the local part of the RHS vector and at least some of the rows of the system matrix allocated to that MPI process in step S10. More specifically, the benchmarking module 520 determines the average time $T_{CPU,SPMV,rowi}$ that it takes the CPU cores in MPI process "i" (where i = 0,...,11 in the present embodiment) to multiply a row of the system matrix with the RHS vector. This is done by timing the multiplication, again preferably for more than one row in order to obtain a better estimate, to obtain a measured execution time $T_{CPU,SMPVi}$. The execution time per row for the ith MPI process, $T_{CPU,SPMV,rowi}$, is then calculated as $T_{CPU,SMPVi}/N_i$, where $N_i$ is the number of rows used to determine $T_{CPU,SMPVi}$. Once the performance of the CPU cores in all of the MPI processes has been benchmarked in this way, the benchmarking module 520 determines a so-called second execution time by selecting a maximum of the determined execution times $T_{CPU,SPMV,rowi}$. As with step S21, the benchmarking module 520 may alternatively determine the second execution time by selecting a minimum of the determined execution times $T_{CPU,SPMV,rowi}$, or by calculating an average (e.g. mean) of the determined execution times $T_{CPU,SPMV,rowi}$ if greater robustness is required.

In step S23, the benchmarking module 520 determines the time taken by the CPU cores in each of the MPI processes to process one or more rows of the contact matrix using the SPMV routine. In the present embodiment, for each of the MPI processes, the benchmarking module 520 benchmarks SPMV with at least some of the contact matrix rows allocated to that MPI process by determining an average execution time per row, which is obtained by timing the multiplication of several of the allocated rows of the contact matrix. The benchmarking module 520 then computes a third execution time, $T_{CPU,SPMV,Contact}$, as the maximum time (across MPI processes) of the average execution times per row that are reported by the MPI processes. The benchmarking module 520 may alternatively compute the third execution time as the minimum or an average time (across MPI processes) of the average execution times per row that are reported by the MPI processes. As will be explained in the following, the processing burden on the CPU cores which process the contact matrix is taken into account when calculating the optimum distribution of the workload in processing the system matrix rows by the accelerator and the CPU cores in the MPI processes.

In step S24, the benchmarking module 520 determines, for each MPI process, a communication time which is indicative of the time required to communicate data for the SPMV routine between the accelerator and the CPU cores mapped to the MPI process. The benchmarking module 520 may determine the communication time from a measure of the data transfer rate in the PCIe bus and the amounts of data that are to be transferred between the host memory and accelerator memory via the PCIe bus during operation of the solver, these latter amounts being derivable from the communication table. More preferably, however, the communication time is obtained from measurements of such transfers. Thus, for each MPI process, in parallel, the benchmarking module 520 benchmarks the transfer of data, as specified in the communication table entry for that process, from the host memory to the accelerator memory and from the accelerator memory to the host memory, and determines the maximum elapsed time across all the MPI processes in each of these cases, which are denoted $T_{CPU-Accel}$ and $T_{Accel-CPU}$, respectively.

Furthermore, the communication table of any given MPI process may indicate that that process is to send and/or receive data from one or more other MPI processes via the network 300. In this case, the total communication time determined by the benchmarking module 520 will also include a network communication time component, $T_{Network}$, which the benchmarking module 520 establishes by determining the time taken for each such MPI process to communicate with one or more other MPI processes via the network 300 in accordance with the communication table entry for that process, and selecting the maximum (or alternatively an average) time among the MPI processes as the network communication time component, $T_{Network}$. The total communication time $T_{COMM}$ is then given by the sum of $T_{CPU-Accel}$, $T_{Acoel-CPU}$ and $T_{Network}$.

In step S25, the workload distribution calculator 530 calculates, based on the first execution time $T_{Accel,SPMV,row}$ determined in step S21, the second execution time $T_{CPU,SPMV,row}$ determined in step S22, the third execution time $T_{CPU,SPMV,Contact}$ determined in step S23 and the total communication time $T_{COMM}$ determined in step S24, the total number of the rows of the system matrix that are to be multiplied with the vector by the accelerator and the total number of the rows of the system matrix that are to be multiplied with the vector by the CPU cores in each of the MPI processes shown in Fig. 1. In the present embodiment, the workload distribution calculator 530 calculates the total numbers of rows such that, in each MPI process, the time taken by the accelerator to execute the SPMV routine using its rows of the system matrix is substantially equal to the sum of the time taken by the CPU cores to execute the SPMV routine using their rows of the system matrix, the time taken by the CPU cores to execute the SPMV routine on the contact matrix assigned to the CPU cores, and a communication time comprising a time required to communicate, between the accelerator and the CPU cores of the MPI process, data comprising results of executing the SPMV routine, the communication times also including (if applicable for that MPI process) the time required for communication between the MPI process and one or more other MPI processes. In this way, the workload is distributed such that the time taken by the accelerator to process its share of the rows of the system matrix is equal to the time taken by the CPU cores to process their share of the rows of the system matrix and exchange the processing results with the accelerator and any other MPI processes, with any processing of the contact matrix by the CPU cores also being taken into account.

In more detail, for each MPI process, the fraction of the total number of system matrix rows allocated in step S10, that are to be computed on the accelerator, is denoted by a partitioning coefficient $\alpha$, such that $\alpha = 1$ means that all of the rows are to be computed on the accelerator while $\alpha = 0$ means that none of the rows are to be computed on the accelerator. In the present embodiment, $\alpha$ is given by the following expression:

$$\alpha = \frac{\left\lfloor \left( T_{COMM} + T_{CPU,SPMV,Contact} \right) / N \right\rfloor + T_{CPU,SPMV,row}}{T_{Accel,SPMV,row} + T_{CPU,SPMV,row}} \qquad \text{Eqn. 1}$$

The number of matrix rows that are to be processed by the accelerator is therefore calculated as $\alpha N$, while the number of rows to be processed by the CPU cores is $(1 - \alpha)N$, where N is the order of the system matrix divided by the number of MPI processes in the multi-processor system. Since the twelve MPI processes are mapped onto identical processing resources in the present embodiment, a single value of $\alpha$ is calculated and used to optimize the workload distribution in all of the MPI processes in the cluster 100.

It should be noted that variations to the processing described above for step S25 are possible depending on the specific application and operation of the MPI processes. For example, in applications not involving a contact matrix, step S23 is omitted and $T_{CPU,SPMV,Contact}$ is set equal to zero in Eqn. 1 above, with the respective total numbers of the rows of the system matrix that are to be processed by the accelerator and CPU cores being calculated in step S25 such that the time taken by the accelerator to execute the SPMV routine using its respective total number of rows of the system matrix is substantially equal to the sum of the time taken by the CPU cores to execute the SPMV routine using their respective total number of rows of the system matrix and a communication time required to communicate, between the accelerator and the CPU cores, results of the executions of the SPMV routine.

Furthermore, in multi-processor systems in which the communication time between the processors is not an important consideration, the respective total numbers of the rows of the system matrix that are to be processed by the accelerator and CPU cores are calculated in step S25 such that the time taken by the accelerator to execute the SPMV routine using its respective total number of rows of the system matrix is substantially equal to the time taken by the CPU cores to execute the SPMV routine using their respective total number of rows of the system matrix.

In step S26, the matrix row assignment module 540 assigns for each MPI process, based on the numbers of rows calculated by the workload distribution calculator 530 in step S25, a first set of rows to the accelerator from among the rows of the system matrix that were allocated to that MPI process in Step S10, and a second set of rows to the CPU cores from among the rows of the sparse matrix that were allocated to that MPI process in Step S10, the assigned sets of rows together accounting for all the rows of the system matrix that were allocated to that MPI process. As noted above, the assignment may be performed by the matrix row assignment module 540 generating an array of indices identifying the rows of the system matrix that have been assigned to the CPU cores for processing, with the rows not identified by the indices then being assigned to the accelerator for processing. The matrix row assignment module 540 then provides the array of indices to the CPU cores and accelerator in each MPI process.

In more detail, for each MPI process, the matrix row assignment module 540 assigns to the CPU cores rows of the sparse matrix whose processing, if executed by the accelerator, would require communication between the accelerator and a second accelerator via the CPU cores. For example, if the assignment of certain one or more matrix rows to accelerator Accel-1 of MPI process "0" in node 200-1 would lead to that accelerator having to send and/or receive any data to/from e.g. accelerator Accel-2 of MPI process "10" in node 200-4 via the host memory used by CPU-1 in node 200-1 and the host memory used by CPU-2 in node 200-4, then the matrix row assignment module 540 assigns to CPU cores C1-C4 of MPI Process "0" the task of processing those one or more matrix rows. In this way, the need for time-consuming exchange of data between the accelerators associated with different MPI processes on different cluster nodes can be avoided. If the number of rows thus assigned to the CPU cores of any given MPI process does not reach the total number of rows calculated for those CPU cores at step S25, then the matrix row assignment module 540 assigns to the CPU cores rows of the sparse matrix from among the remaining allocated rows of the sparse matrix such that the number of rows assigned to the CPU cores equals the calculated total number of rows.

The concept underlying this row assignment scheme can also be usefully applied to avoid a time-consuming transfer of data between the accelerator memories and the host memory in a single node. For example, if the processing of certain matrix rows by accelerator Accel-3 in node 200-1 would require the transfer of missing data from the memory of accelerator Accel-1 to the memory of accelerator Accel-3 in node 200-1 via the host memory in node 200-1, the matrix row assignment module 540 assigns those matrix rows to the CPU cores C3-C6 of node 200-1 for processing, rather than accelerator Accel-3. Thus, even in cases where no inter-node communication over the network 300 is required, it can be advantageous to avoid unnecessary communication between the accelerator and CPU cores with an MPI process.

Based on the assignment by the matrix row assignment module 540, a new matrix in CPU-format may be generated and stored in the host memory. Additionally or alternatively, a new matrix in accelerator-format may be generated and stored in the accelerator memory. The accelerator or the CPU may, instead of generating such a new matrix, simply limit the SPMV operations to the rows assigned thereto by the matrix row assignment module 540.

Conventionally, a solver which uses GPU acceleration for the SPMV operation will use the GPU to process the contact matrix as well. The present inventor has realised that this is not a good choice because the contact matrix is usually much smaller than the minimum size needed by a GPU to work efficiently. Accordingly, in step S27, the matrix row assignment module 540 of the present embodiment further assigns the task of performing the SPMV procedure with the contact matrix to the CPU cores of the MPI processes.

[Second Embodiment]

The multi-processor system of the first embodiment of the invention described above hosts a number of MPI processes that are mapped to identical hardware resources. That is, the MPI processes are all assumed to be associated with respective accelerators that are identical in performance, and with respective CPU cores whose number and performance are also the same for all the MPI processes. In this case, a single partitioning coefficient $\alpha$ for optimizing the workload distribution in all of the MPI processes is calculated on the basis of a single first execution time $T_{Accel,SPMV,row}$ determined in step S21, a single second execution time $T_{CPU,SPMV,row}$ determined in step S22, a single third execution time $T_{CPU,SPMV,Contact}$ determined in step S23 and a single total communication time $T_{COMM}$ determined in step S24, each of which is derived by calculating a maximum, minimum or average of the measured benchmarking results from each MPI process.

In the second embodiment, these assumptions are relaxed such that the hardware resources of each MPI process need not be the same, and a respective value for the partitioning coefficient, $\alpha_i$, is calculated separately for each MPI process, in order to allow the distribution of the workload between the accelerator and CPU cores to be optimized individually for each MPI process.

The structure and operation of the workload distribution controller of the present embodiment is similar to that of the first embodiment described above and the description of common features will not be repeated here for sake of brevity. However, the present embodiment differs from the first embodiment in several respects, and these differences will now be described.

Firstly, in contrast to the operations performed in step S10 of the first embodiment, in the present embodiment, the matrix-partitioning module 510 partitions the system matrix in dependence upon accelerator, CPU and interconnect performance figures, which may be determined for the cluster 100 by using e.g. random test data running any suitable standard benchmarking test familiar to those skilled in the art. Once the performance of the underlying data processing hardware and communication channels has been benchmarked in this conventional way (or once it is otherwise established or known in advance by the user), the matrix may be partitioned among the MPI processes using known techniques to ensure a largely even distribution of the workload among the MPI processes. Of course, in this case, the system matrix rows will generally not be divided into sets of equal size.

The operation of the cluster 100 of the present embodiment during its performance of the FEA computation is otherwise the same as in the first embodiment, which is illustrated in Fig. 4.

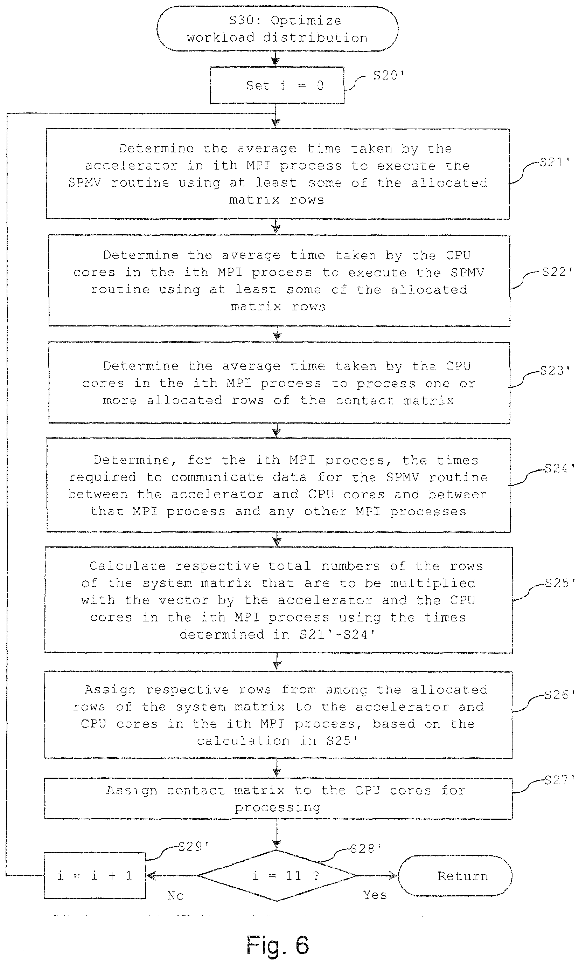

The operations performed by the workload distribution controller 500 of the second embodiment will now be described in further detail with reference to Fig. 6.

In step S20', an index "i" used to label MPI processes is set to zero such that subsequent steps S21' to S29' are performed for MPI process "0" shown in Fig. 1.

Then, in step S21', the benchmarking module 520 benchmarks the performance of the SPMV routine for the accelerator in the $i^{th}$ MPI process to be considered (this being MPI process "0" for the first time step S21' is performed), by determining the time taken by the accelerator to execute the SPMV routine using the local part of the RHS vector and at least some of the rows of the system matrix which were earlier allocated to the $i^{th}$ MPI process, in step S10 as described above. More specifically, the benchmarking module 520 determines the average time $T_{Accel,SPMV,rowi}$ that it takes the accelerator in MPI process "i" to multiply a row of the system matrix with the RHS vector. This is done by timing the multiplication, preferably for more than one row in order to obtain a better estimate, to obtain a measured execution time $T_{Accel,SMPVi}$. The first execution time for MPI process "i" is then taken to be $T_{Accel,SPMV,rowi}$ and is calculated as $T_{Accel,SMPVi}/N_i$, where $N_i$ is the number of rows used to determine $T_{Accel,SMPVi}$.

In step S22', the benchmarking module 520 benchmarks the performance of the SPMV routine for the CPU cores in MPI process "i", by determining the time taken by these cores to execute the SPMV routine using the local part of the RHS vector and at least some of the rows of the system matrix which were earlier allocated to MPI process "i", in step S10. More specifically, the benchmarking module 520 determines the average time $T_{CPU,SPMV,rowi}$ that it takes the CPU cores in MPI process "i" to multiply a row of the system matrix with the RHS vector. This is done by timing the multiplication, again preferably for more than one row in order to obtain a better estimate, to obtain a measured execution time $T_{CPU,SMPVi}$. The second execution time for MPI process "i" is then taken to be $T_{CPU,SPMV,rowi}$ and is calculated as $T_{CPU,SMPVi}/N_i$, where $N_i$ is the number of rows used to determine $T_{CPU,SMPVi}$.

In step S23', the benchmarking module 520 determines the time taken by the CPU cores in MPI process "i" to process one or more rows of the contact matrix using the SPMV routine. More specifically, the benchmarking module 520 benchmarks SPMV with the contact matrix rows allocated to MPI process "i" by determining an execution time per row, which is obtained by timing the multiplication of several of the allocated rows of the contact matrix. In this embodiment, the execution time per row, $T_{CPU,SPMV,Contacti}$, is taken as the third execution time used in the calculation of the matrix partitioning coefficient $\alpha$.

In step S24', the benchmarking module 520 determines, for MPI process "i", a communication time which is indicative of the time required to communicate data for the SPMV routine between the accelerator and the CPU cores. The benchmarking module 520 may determine the communication time from a measure of the data transfer rate in the PCIe bus and the amounts of data that are to be transferred between the host memory and accelerator memory via the PCIe bus during operation of the solver, these latter amounts being derivable from the communication table. More preferably, however, the communication time is obtained from measurements of such transfers. Thus, for MPI process "i", the benchmarking module 520 benchmarks the transfer of data, as specified in the communication table entry for that process, from the host memory to the accelerator memory and from the accelerator memory to the host memory, and determines the time taken in each of these cases, namely $T_{CPU-Acceli}$ and $T_{Accel-CPUi}$, respectively.

Furthermore, the communication table of MPI process "i" may indicate that this process is to send and/or receive data from one or more other MPI processes via the network 300. In this case, the total communication time determined by the benchmarking module 520 will also include a network communication time component, $T_{Networki}$, which the benchmarking module 520 establishes by determining the time taken for MPI process "i" to communicate with one or more other MPI processes via the network 300 in accordance with the communication table entry for process "i", and selecting the maximum time among the MPI processes as the network communication time component, $T_{Networki}$. The total communication time $T_{COMMi}$ for MPI process "i" is then obtained by calculating the sum of $T_{CPU-Acceli}$, $T_{Accel-CPUi}$ and $T_{Networki}$.

In step S25', the workload distribution calculator 530 calculates, based on the times determined in steps S21' to S24', the total number of the rows of the system matrix that are to be multiplied with the vector by the accelerator in MPI process "i" and the total number of the rows of the system matrix that are to be multiplied with the vector by the CPU cores in MPI process "i". In the present embodiment, the workload distribution calculator 530 calculates the total numbers of rows such that, in MPI process "i", the time taken by the accelerator to execute the SPMV routine using its rows of the system matrix is substantially equal to the sum of the time taken by the CPU cores to execute the SPMV routine using their rows of the system matrix, the time taken by the CPU cores to execute the SPMV routine on the contact matrix assigned to the CPU cores, and the communication time comprising a time required to communicate, between the accelerator and the CPU cores of MPI process "i", data comprising results of executing the SPMV routine, as well as any time that might be required for communication between MPI process "i" and one or more other MPI processes.

The fraction of the total number of system matrix rows allocated to MPI process "i" that are to be computed on the accelerator is then calculated on the basis of the times determined in steps S21' to S24', using Eqn. 1. Similar to the first embodiment, the calculation of the numbers of matrix rows to be assigned to the accelerator and the CPU cores may be modified for applications not involving a contact matrix and in cases where the communication time can be neglected.

In step S26[1], the matrix row assignment module 540 assigns for MPI process "i", based on the numbers of rows calculated by the workload distribution calculator 530 in step S25', a first set of rows to accelerator Accel-1 from among the rows of the system matrix that were allocated to MPI process "i" in Step S10, and a second set of rows to the CPU cores from among the rows of the system matrix that were allocated to that MPI process in Step S10, the assigned sets of rows together accounting for all the rows of the system matrix that were allocated for MPI process "i". The remaining rows of the system matrix are assigned to the accelerator for processing.

The matrix row assignment module 540 first assigns to the CPU cores rows of the system matrix whose processing, if executed by the accelerator, would require communication between the accelerator and a second accelerator in the multi-processor system 100 via the CPU cores. For example, if the assignment of certain one or more matrix rows to accelerator Accel-1 of MPI process "0" in node 200-1 would lead to that accelerator having to send and/or receive any data to/from e.g. accelerator Accel-2 of MPI process "10" in node 200-4 via the host memory used by CPU-1 in node 200-1 and the host memory used by CPU-2 in node 200-4, then the matrix row assignment module 540 assigns to CPU cores C1-C4 of MPI Process "0" the task of processing those one or more matrix rows. If the number of rows thus assigned to the CPU cores of MPI process "i" does not reach the total number of rows calculated at step S25' for those CPU cores, the matrix row assignment module 540 assigns to the CPU cores rows of the system matrix from among the remaining allocated rows of the system matrix such that the number of rows assigned to the CPU cores equals the calculated total number of rows.

Then, in step S27', the matrix row assignment module 540 of the present embodiment further assigns the task of performing the SPMV procedure with the contact matrix to the CPU cores of MPI process "i".

The above steps S21' to S27' may then be repeated for each subsequent MPI process in turn, as shown in Fig. 6, by determining at step S28' whether the index "i" has reached the limit of 11 (in which case steps S21' to S27' will have been performed for all of the MPI processes in the system) and, if not, incrementing the index "i" by one at step S29' before looping back to step S21'. However, it is more preferable to perform steps S21' to S27' for all of the MPI processes in parallel.

[Experimental Data]

The speedup obtained using the techniques described above depends on the difference in performance between the accelerators and CPU(s). In general, the closer the performance of the accelerator device is to the host CPU the greater the benefit will be.

To give a better understanding of step S30, whilst demonstrating its correctness and providing a quantitative estimate of the advantages that it provides over a conventional SPMV implementation, two synthetic benchmark cases will now be presented. For simplicity, we take as an example a 3D Poisson problem of order 100 per dimension, leading to a system matrix with the order of 1,000,000. The matrix has seven non-zero elements per row, for a total of 7,000,000 non-zero elements in the matrix. We assume double precision (64 bit) computation, as is the case for most scientific codes.

This problem is taken to be solved on a computer cluster endowed with accelerators. It is assumed that the network interconnect has a typical performance value of 500MB/s, consistent with the performance of a modern Infiniband or 10 GigE network, and that the intra-node interconnect has a performance value of 4GB/s, which is consistent with the performance of a PCIe bus. An accelerator performance of 10 GFLOP/s, consistent with a performance of a high-end GPU using an optimized data format, is also assumed.

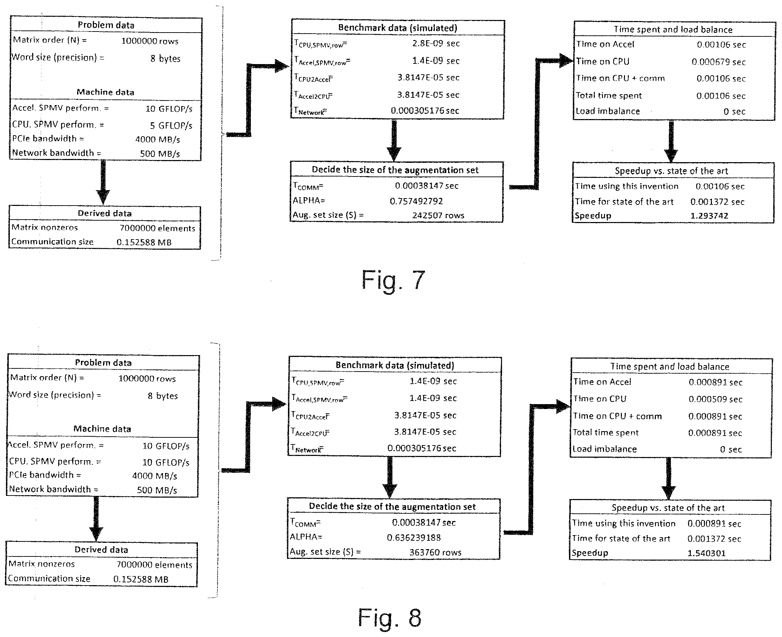

Two scenarios for the performance of the CPU will be considered. The CPU is assumed to be a latest-generation multi-core type, providing 5 GFLOP/s for scenario 1, and 10 GFLOP/s in scenario 2. The results obtained using the workload optimization procedure of step S30 according to an embodiment of the present invention in scenario 1 are shown in Fig. 7, while those obtained in scenario 2 are shown in Fig. 8.

For both scenarios, the SPMV time obtained using the embodiment is compared with a conventional SPMV implementation that overlaps computation with communication and runs on the same hardware, but does not leverage the power of the CPU in the way that the embodiment does. The speedups shown in Fig. 7 and Fig. 8 show that, for these scenarios, the obtained speedup is between 1.3x and 1.5x.

[Modifications and Variations]

Many modification and variations can be made to the embodiments above, alternatively or in addition to those which have already been set out.

For example, the partitioning of the system matrix in step S10 of Fig. 4 is optional and may be omitted in some embodiments. For example, in some applications in which a computational mesh is created, the mesh may be partitioned, with one domain being allocated for each MPI process. Where this is done, local system matrices are usually created directly from the domains, one for each MPI process. In these cases, the local system matrices (rather than the portions of a partitioned system matrix) are allocated to the respective MPI processes.

In addition, the benchmarking processes shown in steps S21 to S24 of Fig. 5 can be performed independently of one another and may therefore be carried out in any order, and two or more of these processes may be performed concurrently. Furthermore, the assignment of the contact matrix to the CPU cores in step S27 may be performed at any stage of the process shown in Fig. 5. Similar modifications may be made to the alternative process steps S21' to S24' and S27' shown in Fig. 6.

Although the present invention has been described above by way of embodiments relating to an HPC cluster of the kind show in Fig. 1, it will be appreciated that the workload optimization techniques are also applicable to other kinds of multi-processor systems. For example, the workload distribution controller 500 may alternatively function to control the distribution between a first processor, for example in the form of a CPU of a computer (e.g. a desktop PC, a laptop, tablet or other portable computing device) and a second processor, for example in the form of an accelerator card also provided in the computer, of the workload in multiplying a sparse matrix by a vector using an SPMV routine executed by each of the processors. Furthermore, regardless of kind of multi-processor system being used, the processors may be arranged to communicate over an internal interconnect bus (e.g. PCIe, as in the above embodiments), via a network, or any other kind of communication channel over which the processors may exchange the data required to share the task of executing the SPMV operations.

**Claims**

1. A method of controlling a distribution, between a first processor (Accel-1) and a second processor (C1-C4), of a workload in multiplying a sparse matrix by a vector using a Sparse-Matrix Vector Multiplication, SPMV, routine executed by each of the processors, the method comprising:

   determining (S21, S22) a first execution time and a second execution time indicative of times taken by the first and second processors, respectively, to execute the SPMV routine using the vector and at least some of the rows of the sparse matrix;
   calculating (S25), based on the determined first and second execution times, respective total numbers of the rows of the sparse matrix that are to be multiplied with the vector by the first and second processors such that the time taken by the first processor (Accel-1) to execute the SPMV routine using its respective total number of rows of the sparse matrix is substantially equal to a time comprising the time taken by the second processor (C1-C4) to execute the SPMV routine using its respective total number of rows of the sparse matrix; and
   assigning (S26), based on the calculated numbers of rows, respective rows of the sparse matrix to the first and second processors for multiplication by the vector,
   **characterised in that** the respective rows of the sparse matrix are assigned to the first and second processors for multiplication by the vector by assigning to a single one of the first and second processors rows of the sparse matrix whose processing would require communication between the first and second processors if executed by the other processor and, if the number of rows thus assigned to said single processor does not reach the total number of rows calculated for said single processor, assigning to said single processor rows of the sparse matrix from among the remaining rows of the sparse matrix such that the number of rows assigned to said processor equals the total number of rows calculated for that processor.

2. A method according to claim 1, further comprising:

   determining (S24) a communication time indicative of a time required to communicate data for the SPMV routine between the first and second processors via a communication channel (PCIe, 300),
   wherein the respective total numbers of the rows of the sparse matrix that are to be multiplied with the vector by the first and second processors are calculated (S25), based on the determined first and second execution times and the determined communication time, such that the time taken by the first processor (Accel-1) to execute the SPMV routine using its respective total number of rows of the sparse matrix is substantially equal to a time comprising the sum of the time taken by the second processor (C1-C4) to execute the SPMV routine using its respective total number of rows of the sparse matrix and a communication time required to communicate, between the first and second processors, data comprising results of the executions of the SPMV routine.

3. A method according to claim 2, wherein the method is performed to control the distribution of the workload between a first processor comprising an accelerator (Accel-1) and a second processor comprising a CPU or at least one core (C1-C4) of a multi-core CPU (CPU-1) that are arranged to iteratively solve a system of sparse linear equations as part of a finite element analysis calculation using a model of multiple objects having mechanical contact therebetween, and
   wherein:

   contact boundary conditions for the objects in the model are specified in a contact matrix;
   a third execution time indicative of a time taken by the CPU or the at least one core (C1-C4) to process the one or more rows of the contact matrix using the SPMV routine is determined (S23) using one or more rows of the contact matrix;
   the respective total numbers of the rows of the sparse matrix that are to be multiplied with the vector by the accelerator (Accel-1) and by the CPU or the at least one core (C1-C4) are calculated (S25), based on the determined first, second and third execution times and the determined communication time, such that the time taken by the accelerator (Accel-1) to execute the SPMV routine using its respective total number of rows of the sparse matrix is substantially equal to the sum of the time taken by the CPU or the at least one core (C1-C4) to execute the SPMV routine using its respective total number of rows of the sparse matrix, the time taken by the CPU or the at least one core (C1-C4) to execute the SPMV routine using the contact matrix and a communication time required to communicate, between the accelerator (Accel-1) and the CPU or the at least one core (C1-C4), data comprising results of the executions of the SPMV routine; and
   based on the calculated total numbers of the rows of the sparse matrix, respective rows of the sparse matrix are assigned (S26) to the accelerator (Accel-1) and to the CPU or the at least one core (C1-C4) for multiplication by the vector, the contact matrix being assigned (S27) to the CPU or the at least one core (C1-C4) for processing.

4. A method according to any preceding claim, wherein the first processor comprises an accelerator (Accel-1) and the second processor comprises a CPU or at least one core (C1-C4) of a multi-core CPU (CPU-1), and assigning (S26) rows of the sparse matrix to the first and second processors for multiplication by the vector comprises assigning to the CPU or the at least one core (C1-C4) rows of the sparse matrix whose processing, if executed by the accelerator (Accel-1), would require communication between the accelerator (Accel-1) and a second accelerator (Accel-2; Accel-3) via the CPU or the at least one core (C1-C4) and, if the number of rows thus assigned to the CPU or the at least one core (C1-C4) does not reach the calculated total number of rows, assigning to the CPU or the at least one core (C1-C4) rows of the sparse matrix from among the remaining rows of the sparse matrix such that the number of rows assigned to the CPU or the at least one core (C1-C4) equals the calculated total number of rows.

5. A method according to any preceding claim, further comprising:

   determining (S40) a difference between the time taken by the first processor (Accel-1) to execute the SPMV routine using its respective total number of rows of the sparse matrix and the time comprising the time taken by the second processor (C1-C4) to execute the SPMV routine using its respective total number of rows of the sparse matrix; and
   comparing the determined difference with a threshold and, if the difference exceeds the threshold, repeating the method (S20) of controlling the distribution of the workload between the first and second processors.

6. A method according to claim 2 or claim 3, or any of claims 4 and 5 when ultimately dependent on claim 2 or claim 3, further comprising:

   partitioning (S10) the sparse matrix into sets of rows and allocating the multiplication of each set of rows by the vector using the SPMV routine to a respective Message Passing Interface, MPI, process of a plurality of MPI processes, each MPI process being implemented on respective such first and second processors that are operationally connected to each other, wherein the first processor comprises an accelerator (Accel-1) and the second processor comprises a CPU or at least one core (C1-C4) of a multi-core CPU (CPU-1),
   and wherein:

   determining (S21) the first execution time comprises determining a time taken by the accelerator (Accel-1) in each MPI process to execute the SPMV routine using the vector and at least some of the rows of the sparse matrix allocated to that MPI process, and selecting a maximum, a minimum or an average of the determined execution times as the first execution time;
   determining (S22) the second execution time comprises determining the time taken by the CPU or the at least one core (C1-C4) in each MPI process to execute the SPMV routine using the vector and at least some of the rows of the sparse matrix allocated to that MPI process, and selecting a maximum, a minimum or an average of the determined execution times as the second execution time;
   determining (S24) the communication time comprises determining, for each of the MPI processes, a communication time indicative of a time required to communicate data for the SPMV routine between the accelerator (Accel-1) and the CPU or the at least one core (C1-C4), and selecting a maximum of the determined times as the communication time; and
   the calculation (S25) of the respective total numbers of the rows of the sparse matrix and the assignment (26) of rows are performed for each of the MPI processes.

7. A workload distribution controller (500) for controlling a distribution, between a first processor (Accel-1) and a second processor (C1-C4), of a workload in multiplying a sparse matrix by a vector using a Sparse-Matrix Vector Multiplication, SPMV, routine executed by each of the processors, the workload distribution controller (500) comprising:

   a benchmarking module (520) arranged to determine a first execution time and a second execution time indicative of times taken by the first and second processors, respectively, to execute the SPMV routine using the vector and at least some of the rows of the sparse matrix;
   a workload distribution calculator (530) arranged to calculate, based on the determined first and second execution times, respective total numbers of the rows of the sparse matrix that are to be multiplied with the vector by the first and second processors such that the time taken by the first processor (Accel-1) to execute the SPMV routine using its respective total number of rows of the sparse matrix is substantially equal to a time comprising the time taken by the second processor (C1-C4) to execute the SPMV routine using its respective total number of rows of the sparse matrix; and
a matrix row assignment module (540) operable to assign, based on the calculated numbers of rows, respective rows of the sparse matrix to the first and second processors for multiplication by the vector, **characterised in that** the matrix row assignment module (540) is operable to assign the respective rows of the sparse matrix to the first and second processors for multiplication by the vector by assigning to a single one of the first and second processors rows of the sparse matrix whose processing would require communication between the first and second processors if executed by the other processor and, if the number of rows thus assigned to said single processor does not reach the total number of rows calculated for said single processor, assigning to said single processor rows of the sparse matrix from among the remaining rows of the sparse matrix such that the number of rows assigned to said processor equals the total number of rows calculated for that processor.

8. A workload distribution controller according to claim 7, wherein:

the benchmarking module (520) is further arranged to determine a communication time indicative of a time required to communicate data for the SPMV routine between the first and second processors via a communication channel (PCIe, 300); and
the workload distribution calculator (530) is arranged to calculate, based on the determined first and second execution times and the determined communication time, the respective total numbers of rows of the sparse matrix that are to be multiplied with the vector by the first and second processors such that the time taken by the first processor (Accel-1) to execute the SPMV routine using its respective total number of rows of the sparse matrix is substantially equal to a time comprising the sum of the time taken by the second processor (C1-C4) to execute the SPMV routine using its respective total number of rows of the sparse matrix and a communication time required to communicate, between the first and second processors, data comprising results of the executions of the SPMV routine.

9. A workload distribution controller according to claim 8, arranged to control the distribution of the workload between a first processor comprising an accelerator (Accel-1) and a second processor comprising a CPU or at least one core (C1-C4) of a multi-core CPU (CPU-1) that are arranged to iteratively solve a system of sparse linear equations as part of a finite element analysis calculation using a model of multiple objects having mechanical contact therebetween, wherein:

contact boundary conditions for the objects in the model are specified in a contact matrix;
the benchmarking module (520) is further operable to determine a third execution time indicative of a time taken by the CPU or the at least one core (C1-C4) to process one or more rows of the contact matrix using the SPMV routine;
the workload distribution calculator (530) is arranged to calculate, based on the determined first, second and third execution times and the determined communication time, the respective total numbers of the rows of the sparse matrix that are to be multiplied with the vector by the accelerator (Accel-1) and by the CPU or the at least one core (C1-C4) such that the time taken by the accelerator (Accel-1) to execute the SPMV routine using its respective total number of rows of the sparse matrix is substantially equal to the sum of the time taken by the CPU or the at least one core (C1-C4) to execute the SPMV routine using its respective total number of rows of the sparse matrix, the time taken by the CPU or the at least one core (C1-C4) to execute the SPMV routine using the contact matrix and a communication time required to communicate, between the accelerator (Accel-1) and the CPU or the at least one core (C1-C4), data comprising results of the executions of the SPMV routine; and
the matrix row assignment module (540) is operable to assign, based on the calculated total numbers of the rows of the sparse matrix, respective rows of the sparse matrix to the accelerator (Accel-1), and to the CPU or the at least one core (C1-C4), for multiplication by the vector, the matrix row assignment module (540) being further operable to assign the contact matrix to the CPU or the at least one core (C1-C4) for processing.

10. A workload distribution controller according to any of claims 7, 8 and 9, wherein the first processor comprises an accelerator (Accel-1) and the second processor comprises a CPU or at least one core (C1-C4) of a multi-core CPU (CPU-1), and the matrix row assignment module (540) is arranged to assign rows of the sparse matrix to the first and second processors by assigning to the CPU or the at least one core (C1-C4) rows of the sparse matrix whose processing, if executed by the accelerator (Accel-1), would require communication between the accelerator (Accel-1) and a second accelerator (Accel-2; Accel-3) via the CPU or the at least one core (C1-C4) and, if the number of rows thus assigned to the CPU or the at least one core (C1-C4) does not reach the calculated total number of rows, assigning to the CPU or the at least one core rows of the sparse matrix from among the remaining rows of the sparse matrix such that the number of rows assigned to the CPU or the at least one core (C1-C4) equals the calculated total number of rows.

11. A workload distribution controller according to any of claims 7 to 10, further comprising:

a monitor module (560) arranged to determine a difference between the time taken by the first processor (Accel-1) to execute the SPMV routine using its respective total number of rows of the sparse matrix and the time comprising the time taken by the second processor (C1-C4) to execute the SPMV routine using its respective total number of rows of the sparse matrix; and
a trigger module (550) arranged to compare the determined difference with a threshold and, if the difference exceeds the threshold, cause the workload distribution controller (500) to control the distribution of the workload between the first and second processors such that the difference decreases to below said threshold.

12. A workload distribution controller according to claim 8 or claim 9, or any of claims 10 and 11 when ultimately dependent on claim 8 or claim 9, further comprising:

a matrix-partitioning module (510) operable to partition the sparse matrix into sets of rows and allocate the multiplication of each set of rows by the vector using the SPMV routine to a respective Message Passing Interface, MPI, process of a plurality of MPI processes, each MPI process being implemented on respective such first and second processors that are operationally connected to each other, wherein the first processor comprises an accelerator (Accel-1) and the second processor comprises a CPU or at least one core (C1-C4) of a multi-core CPU (CPU-1),
wherein the benchmarking module (520) is arranged to:

determine the first execution time by determining a time taken by the accelerator (Accel-1) in each MPI process to execute the SPMV routine using the vector and at least some of the rows of the sparse matrix allocated to that MPI process, and selecting a maximum, a minimum or an average of the determined execution times as the first execution time;
determine the second execution time by determining the time taken by the CPU or the at least one core (C1-C4) in each MPI process to execute the SPMV routine using the vector and at least some of the rows of the sparse matrix allocated to that MPI process, and selecting a maximum, a minimum or an average of the determined execution times as the second execution time;
determine the communication time by determining, for each of the MPI processes, a communication time indicative of a time required to communicate data for the SPMV routine between the accelerator (Accel-1) and the CPU or the at least one core (C1-C4), and selecting a maximum of the determined times as the communication time; and

wherein the workload distribution calculator (530) is arranged to calculate the respective total numbers of the rows of the sparse matrix for each of the MPI processes, and the matrix row assignment module (540) is arranged to assign the respective rows of the sparse matrix for each of the MPI processes.

13. A data processing system (100) comprising:

a first processor (Accel-1) and a second processor (C1-C4) each arranged to execute a Sparse-Matrix Vector Multiplication, SPMV, routine; and
a workload distribution controller (500) according to any of claims 7 to 12 arranged to control a distribution, between the first processor and second processor, of the workload in multiplying the sparse matrix by the vector using the SPMV routine executed by each of the processors.

14. A computer-readable storage medium (650) storing computer program instructions which, when executed by a processor (610), cause the processor (610) to perform a method as set out in at least one of claims 1 to 6.

**Patentansprüche**

1. Verfahren zum Steuern einer Verteilung, zwischen einem ersten Prozessor (Accel-1) und einem zweiten Prozessor (C1 - C4), einer Auslastung beim Multiplizieren einer dünn besetzten Matrix mit einem Vektor unter Verwendung einer Routine für eine Vektormultiplikation mit dünn besetzter Matrix, SPMV, die von jedem der Prozessoren ausgeführt wird, wobei das Verfahren umfasst:

Bestimmen (S21, S22) einer ersten Ausführungszeit und einer zweiten Ausführungszeit, die Zeiten angeben, die von den ersten bzw. zweiten Prozessoren in Anspruch genommen werden, um die SPMV-Routine unter Verwendung des Vektors und zumindest einiger der Reihen der dünn besetzten Matrix auszuführen;

Berechnen (S25), basierend auf den bestimmten ersten und zweiten Ausführungszeiten, jeweiliger Gesamtzahlen der Reihen der dünn besetzten Matrix, die durch die ersten und zweiten Prozessoren mit dem Vektor multipliziert werden sollen, so dass die Zeit, die vom ersten Prozessor (Accel-1) in Anspruch genommen wird, um die SPMV-Routine unter Verwendung seiner jeweiligen Gesamtzahl von Reihen der dünn besetzten Matrix auszuführen, im Wesentlichen gleich einer Zeit ist, die die Zeit umfasst, die von dem zweiten Prozessor (C1 - C4) in Anspruch genommen wird, um die SPMV-Routine unter Verwendung seiner jeweiligen Gesamtzahl von Reihen der dünn besetzten Matrix auszuführen; und

Zuweisen (S26), basierend auf den berechneten Zahlen von Reihen, jeweiliger Reihen der dünn besetzten Matrix den ersten und zweiten Prozessoren für eine Multiplikation mit dem Vektor, **dadurch gekennzeichnet, dass** die jeweiligen Reihen der dünn besetzten Matrix den ersten und zweiten Prozessoren zugewiesen werden für eine Multiplikation mit dem Vektor, indem einem einzelnen der ersten und zweiten Prozessoren Reihen der dünn besetzten Matrix zugewiesen werden, deren Verarbeitung eine Kommunikation zwischen den ersten und zweiten Prozessoren erfordern würde, falls sie durch den anderen Prozessor ausgeführt wird, und, falls die Anzahl von so dem einzelnen Prozessor zugewiesenen Reihen die Gesamtzahl von Reihen nicht erreicht, die für den einzelnen Prozessor berechnet wurde, dem einzelnen Prozessor Reihen der dünn besetzten Matrix unter den übrigen Reihen der dünn besetzten Matrix zugewiesen werden, so dass die Anzahl von Reihen, die dem Prozessor zugewiesen sind, gleich der Gesamtzahl von Reihen ist, die für diesen Prozessor berechnet wurde.

2. Verfahren nach Anspruch 1, weiter umfassend:

Bestimmen (S24) einer Kommunikationszeit, die eine Zeit angibt, die erforderlich ist, um Daten für die SPMV-Routine zwischen den ersten und zweiten Prozessoren über einen Kommunikationskanal (PCIe, 300) zu kommunizieren,

wobei die jeweiligen Gesamtzahlen der Reihen der dünn besetzten Matrix, die durch die ersten und zweiten Prozessoren mit dem Vektor multipliziert werden sollen, basierend auf den bestimmten ersten und zweiten Ausführungszeiten und der bestimmten Kommunikationszeit berechnet werden (S25), so dass die Zeit, die vom ersten Prozessor (Accel-1) in Anspruch genommen wird, um die SPMV-Routine unter Verwendung seiner jeweiligen Gesamtzahl von Reihen der dünn besetzten Matrix auszuführen, im Wesentlichen gleich einer Zeit ist, die die Summe der Zeit, die vom zweiten Prozessor (C1 - C4) in Anspruch genommen wird, um die SPMV-Routine unter Verwendung seiner jeweiligen Gesamtzahl von Reihen der dünn besetzten Matrix auszuführen, und einer Kommunikationszeit umfasst, die erforderlich ist, um zwischen den ersten und zweiten Prozessoren Daten mit Ergebnissen der Ausführungen der SPMV-Routine zu kommunizieren.

3. Verfahren nach Anspruch 2, wobei das Verfahren durchgeführt wird, um die Verteilung der Auslastung zwischen einem ersten Prozessor mit einem Accelerator (Accel-1) und einem zweiten Prozessor mit einer CPU oder zumindest einem Kern (C1 - C4) einer Mehrkern-CPU (CPU-1) zu steuern, die eingerichtet sind, um ein System dünn besetzter linearer Gleichungen als Teil einer Finite-Element-Analyse unter Verwendung eines Modells mehrerer Objekte mit mechanischem Kontakt dazwischen iterativ zu lösen, und wobei:

Kontaktrandbedingungen für die Objekte in dem Modell in einer Kontaktmatrix spezifiziert werden; eine dritte Ausführungszeit, die eine Zeit angibt, die von der CPU oder dem zumindest einen Kern (C1 - C4) in Anspruch genommen wird, um die eine oder mehrere Reihen der Kontaktmatrix unter Verwendung der SPMV-Routine zu verarbeiten, unter Verwendung einer oder mehrerer Reihen der Kontaktmatrix bestimmt wird (S23); die jeweiligen Gesamtzahlen der Reihen der dünn besetzten Matrix, die durch den Accelerator (Accel-1) und durch die CPU oder den zumindest einen Kern (C1 - C4) mit dem Vektor multipliziert werden sollen, basierend auf den bestimmten ersten, zweiten und dritten Ausführungszeiten und der bestimmten Kommunikationszeit berechnet werden (S25), so dass die Zeit, die von dem Accelerator (Accel-1) in Anspruch genommen wird, um die SPMV-Routine unter Verwendung seiner jeweiligen Gesamtzahl von Reihen der dünn besetzten Matrix auszuführen, im Wesentlichen gleich ist der Summe der Zeit, die von der CPU oder dem zumindest einen Kern (C1 - C4) in Anspruch genommen wird, um die SPMV-Routine unter Verwendung seiner jeweiligen Gesamtzahl von Reihen der dünn besetzten Matrix auszuführen, der Zeit, die von der CPU oder dem zumindest einen Kern (C1 - C4) in Anspruch genommen wird, um die SPMV-Routine unter Verwendung der Kontaktmatrix auszuführen, und einer Kommunikationszeit, die erforderlich ist, um zwischen dem Accelerator (Accel-1) und der CPU oder dem zumindest einen Kern (C1 - C4) Daten mit Ergebnissen der Ausführungen der SPMV-Routine zu kommunizieren; und

basierend auf den berechneten Gesamtzahlen der Reihen der dünn besetzten Matrix, jeweilige Reihen der dünn besetzten Matrix dem Accelerator (Accel-1) und der CPU oder dem zumindest einen Kern (C1 - C4) für eine Multiplikation mit dem Vektor zugewiesen werden (S26), wobei die Kontaktmatrix der CPU oder dem zumindest einen Kern (C1 - C4) zur Verarbeitung zugewiesen wird (S27).

4.  Verfahren nach einem der vorstehenden Ansprüche, wobei der erste Prozessor einen Accelerator (Accel-1) umfasst und der zweite Prozessor eine CPU oder zumindest einen Kern (C1 - C4) einer Multikern-CPU (CPU-1) umfasst und ein Zuweisen (S26) von Reihen der dünn besetzten Matrix den ersten und zweiten Prozessoren für eine Multiplikation mit dem Vektor ein Zuweisen, der CPU oder dem zumindest einen Kern (C1 - C4), von Reihen der dünn besetzten Matrix umfasst, deren Verarbeitung, falls sie durch den Accelerator (Accel-1) ausgeführt wird, eine Kommunikation zwischen dem Accelerator-1 (Accel-1) und einem zweiten Accelerator (Accel-2; Accel-3) über die CPU oder den zumindest einen Kern (C1 - C4) erfordern würde, und, falls die Anzahl von der CPU oder dem zumindest einen Kern (C1 - C4) so zugewiesenen Reihen die berechnete Gesamtzahl von Reihen nicht erreicht, ein Zuweisen, der CPU oder dem zumindest einen Kern (C1 - C4), von Reihen der dünn besetzten Matrix unter den übrigen Reihen der dünn besetzten Matrix, so dass die Anzahl von der CPU oder dem zumindest einen Kern (C1 - C4) zugewiesenen Reihen gleich der berechneten Gesamtzahl von Reihen ist.

5.  Verfahren nach einem der vorstehenden Ansprüche, weiter umfassend:

    Bestimmen (S40) einer Differenz zwischen der Zeit, die von dem ersten Prozessor (Accel-1) in Anspruch genommen wird, um die SPMV-Routine unter Verwendung seiner jeweiligen Gesamtzahl von Reihen der dünn besetzten Matrix auszuführen, und der Zeit, die die Zeit umfasst, die durch den zweiten Prozessor (C1 - C4) in Anspruch genommen wird, um die SPMV-Routine unter Verwendung seiner jeweiligen Gesamtzahl von Reihen der dünn besetzten Matrix auszuführen; und

    Vergleichen der bestimmten Differenz mit einer Schwelle und, falls die Differenz die Schwelle übersteigt, Wiederholen des Verfahrens (S20) zum Steuern der Verteilung der Auslastung zwischen den ersten und zweiten Prozessoren.

6.  Verfahren nach Anspruch 2 oder Anspruch 3 oder einem der Ansprüche 4 und 5, wenn letztendlich abhängig von Anspruch 2 oder Anspruch 3, weiter umfassend:

    Partitionieren (S10) der dünn besetzten Matrix in Sätze von Reihen und Zuordnen der Multiplikation jedes Satzes von Reihen mit dem Vektor unter Verwendung der SPMV-Routine einem jeweiligen Message-Passing-Interface (MPI)-Prozess einer Vielzahl von MPI-Prozessen, wobei jeder MPI-Prozess auf jeweiligen solchen ersten und zweiten Prozessoren implementiert ist, die operativ miteinander verbunden sind, wobei der erste Prozessor einen Accelerator (Accel-1) umfasst und der zweite Prozessor eine CPU oder zumindest einen Kern (C1 - C4) einer Multikern-CPU (CPU-1) umfasst, und wobei:

        ein Bestimmen (S21) der ersten Ausführungszeit ein Bestimmen einer Zeit, die von dem Accelerator (Accel-1) in jedem MPI-Prozess in Anspruch genommen wird, um die SPMV-Routine unter Verwendung des Vektors und zumindest einiger der Reihen der dünn besetzten Matrix auszuführen, die diesem MPI-Prozess zugeordnet wurden, und ein Auswählen eines Maximums, eines Minimums oder eines Durchschnitts der bestimmten Ausführungszeiten als die erste Ausführungszeit umfasst;
        ein Bestimmen (S22) der zweiten Ausführungszeit ein Bestimmen der Zeit, die von der CPU oder dem zumindest einen Kern (C1 - C4) in jedem MPI-Prozess in Anspruch genommen wird, um die SPMV-Routine unter Verwendung des Vektors und zumindest einiger der Reihen der dünn besetzten Matrix, die diesem MPI-Prozess zugeordnet wurden, auszuführen, und ein Auswählen eines Maximums, eines Minimums oder eines Durchschnitts der bestimmten Ausführungszeiten als die zweite Ausführungszeit umfasst;
        ein Bestimmen (S24) der Kommunikationszeit ein Bestimmen, für jeden der MPI-Prozesse, einer Kommunikationszeit, die eine Zeit angibt, die erforderlich ist, um Daten für die SPMV-Routine zwischen dem Accelerator (Accel-1) und der CPU oder dem zumindest einen Kern (C1 - C4) zu kommunizieren, und ein Auswählen eines Maximums der bestimmten Zeiten als die Kommunikationszeit umfasst; und

die Berechnung (S25) der jeweiligen Gesamtzahlen der Reihen der dünn besetzten Matrix und die Zuweisung (26) von Reihen für jeden der MPI-Prozesse durchgeführt werden.

7. Auslastungsverteilungs-Controller (500) zum Steuern einer Verteilung, zwischen einem ersten Prozessor (Accel-1) und einem zweiten Prozessor (C1 - C4), einer Auslastung beim Multiplizieren einer dünn besetzten Matrix mit einem Vektor unter Verwendung einer Routine für eine Vektormultiplikation mit dünn besetzter Matrix, SPMV, die von jedem der Prozessoren ausgeführt wird, wobei der Auslastungsverteilungs-Controller (500) umfasst:

ein Benchmarking- bzw. Leistungsvergleichsmodul (520), das eingerichtet ist, um eine erste Ausführungszeit und eine zweite Ausführungszeit zu bestimmen, die Zeiten angeben, die von den ersten bzw. zweiten Prozessoren in Anspruch genommen werden, um die SPMV-Routine unter Verwendung des Vektors und zumindest einiger der Reihen der dünn besetzten Matrix auszuführen;

einen Auslastungsverteilungs-Rechner (530), der eingerichtet ist, um basierend auf den bestimmten ersten und zweiten Ausführungszeiten jeweilige Gesamtzahlen der Reihen der dünn besetzten Matrix zu berechnen, die durch die ersten und zweiten Prozessoren mit dem Vektor multipliziert werden sollen, so dass die Zeit, die vom ersten Prozessor (Accel-1) in Anspruch genommen wird, um die SPMV-Routine unter Verwendung seiner jeweiligen Gesamtzahl von Reihen der dünn besetzten Matrix auszuführen, im Wesentlichen gleich einer Zeit ist, die die Zeit umfasst, die von dem zweiten Prozessor (C1 - C4) in Anspruch genommen wird, um die SPMV-Routine unter Verwendung seiner jeweiligen Gesamtzahl von Reihen der dünn besetzten Matrix auszuführen; und

ein Matrixreihen-Zuweisungsmodul (540), das betreibbar ist, um basierend auf den berechneten Zahlen von Reihen jeweilige Reihen der dünn besetzten Matrix den ersten und zweiten Prozessoren für eine Multiplikation mit dem Vektor zuzuweisen,

**dadurch gekennzeichnet, dass** das Matrixreihen-Zuweisungsmodul (540) betreibbar ist, um die jeweiligen Reihen der dünn besetzten Matrix den ersten und zweiten Prozessoren für eine Multiplikation mit dem Vektor zuzuweisen, indem einem einzelnen der ersten und zweiten Prozessoren Reihen der dünn besetzten Matrix zugewiesen werden, deren Verarbeitung eine Kommunikation zwischen den ersten und zweiten Prozessoren erfordern würde, falls sie durch den anderen Prozessor ausgeführt wird, und, falls die Anzahl von so dem einzelnen Prozessor zugewiesenen Reihen die Gesamtzahl von Reihen nicht erreicht, die für den einzelnen Prozessor berechnet wurde, dem einzelnen Prozessor Reihen der dünn besetzten Matrix unter den übrigen Reihen der dünn besetzten Matrix zugewiesen werden, so dass die Anzahl von Reihen, die dem Prozessor zugewiesen sind, gleich der Gesamtzahl von Reihen ist, die für diesen Prozessor berechnet wurde.

8. Auslastungsverteilungs-Controller nach Anspruch 7, wobei:

das Leistungsvergleichsmodul (520) weiter eingerichtet ist, um eine Kommunikationszeit zu bestimmen, die eine Zeit angibt, die erforderlich ist, um Daten für die SPMV-Routine zwischen den ersten und zweiten Prozessoren über einen Kommunikationskanal (PCIe, 300) zu kommunizieren; und

der Auslastungsverteilungs-Rechner (530) eingerichtet ist, um basierend auf den bestimmten ersten und zweiten Ausführungszeiten und der bestimmten Kommunikationszeit die jeweiligen Gesamtzahlen von Reihen der dünn besetzten Matrix zu berechnen, die durch die ersten und zweiten Prozessoren mit dem Vektor multipliziert werden sollen, so dass die Zeit, die vom ersten Prozessor (Accel-1) in Anspruch genommen wird, um die SPMV-Routine unter Verwendung seiner jeweiligen Gesamtzahl von Reihen der dünn besetzten Matrix auszuführen, im Wesentlichen gleich einer Zeit ist, die die Summe der Zeit, die vom zweiten Prozessor (C1 - C4) in Anspruch genommen wird, um die SPMV-Routine unter Verwendung seiner jeweiligen Gesamtzahl von Reihen der dünn besetzten Matrix auszuführen, und einer Kommunikationszeit umfasst, die erforderlich ist, um zwischen den ersten und zweiten Prozessoren Daten mit Ergebnissen der Ausführungen der SPMV-Routine zu kommunizieren.

9. Auslastungsverteilungs-Controller nach Anspruch 8, der eingerichtet ist, um die Verteilung der Auslastung zwischen einem ersten Prozessor mit einem Accelerator (Accel-1) und einem zweiten Prozessor mit einer CPU oder zumindest einem Kern (C1 - C4) einer Mehrkern-CPU (CPU-1) zu steuern, die eingerichtet sind, um ein System dünn besetzter linearer Gleichungen als Teil einer Finite-Element-Analyse unter Verwendung eines Modells mehrerer Objekte mit mechanischem Kontakt dazwischen iterativ zu lösen, und wobei:

Kontaktrandbedingungen für die Objekte in dem Modell in einer Kontaktmatrix spezifiziert werden;
das Leistungsvergleichsmodul (520) weiter betreibbar ist, um eine dritte Ausführungszeit zu bestimmen, die eine Zeit angibt, die von der CPU oder dem zumindest einen Kern (C1 - C4) in Anspruch genommen wird, um eine oder mehrere Reihen der Kontaktmatrix unter Verwendung der SPMV-Routine zu verarbeiten;

der Auslastungsverteilungs-Rechner (530) eingerichtet ist, um basierend auf den bestimmten ersten, zweiten und dritten Ausführungszeiten und der bestimmten Kommunikationszeit die jeweiligen Gesamtzahlen der Reihen der dünn besetzten Matrix zu berechnen, die durch den Accelerator (Accel-1) und durch die CPU oder den zumindest einen Kern (C1 - C4) mit dem Vektor multipliziert werden sollen, so dass die Zeit, die von dem Accelerator (Accel-1) in Anspruch genommen wird, um die SPMV-Routine unter Verwendung seiner jeweiligen Gesamtzahl von Reihen der dünn besetzten Matrix auszuführen, im Wesentlichen gleich ist der Summe der Zeit, die von der CPU oder dem zumindest einen Kern (C1 - C4) in Anspruch genommen wird, um die SPMV-Routine unter Verwendung seiner jeweiligen Gesamtzahl von Reihen der dünn besetzten Matrix auszuführen, der Zeit, die von der CPU oder dem zumindest einen Kern (C1 - C4) in Anspruch genommen wird, um die SPMV-Routine unter Verwendung der Kontaktmatrix auszuführen, und einer Kommunikationszeit, die erforderlich ist, um zwischen dem Accelerator (Accel-1) und der CPU oder dem zumindest einen Kern (C1 - C4) Daten mit Ergebnissen der Ausführungen der SPMV-Routine zu kommunizieren; und

das Matrixreihen-Zuweisungsmodul (540) betreibbar ist, um basierend auf den berechneten Gesamtzahlen der Reihen der dünn besetzten Matrix jeweilige Reihen der dünn besetzten Matrix dem Accelerator (Accel-1) und der CPU oder dem zumindest einen Kern (C1 - C4) für eine Multiplikation mit dem Vektor zuzuweisen, wobei das Matrixreihen-Zuweisungsmodul (540) weiter betreibbar ist, um die Kontaktmatrix der CPU oder dem zumindest einen Kern (C1 - C4) für eine Verarbeitung zuzuweisen.

10. Auslastungsverteilungs-Controller nach einem der Ansprüche 7, 8 und 9, wobei der erste Prozessor einen Accelerator (Accel-1) umfasst und der zweite Prozessor eine CPU oder zumindest einen Kern (C1 - C4) einer Multikern-CPU (CPU-1) umfasst, und das Matrixreihen-Zuweisungsmodul (540) eingerichtet ist, um Reihen der dünn besetzten Matrix den ersten und zweiten Prozessoren zuzuweisen, indem der CPU oder dem zumindest einen Kern (C1 - C4) Reihen der dünn besetzten Matrix zugewiesen werden, deren Verarbeitung, falls sie durch den Accelerator (Accel-1) ausgeführt wird, eine Kommunikation zwischen dem Accelerator-1 (Accel-1) und einem zweiten Accelerator (Accel-2; Accel-3) über die CPU oder den zumindest einen Kern (C1 - C4) erfordern würde, und, falls die Anzahl von der CPU oder dem zumindest einen Kern (C1 - C4) so zugewiesenen Reihen die berechnete Gesamtzahl von Reihen nicht erreicht, der CPU oder dem zumindest einen Kern Reihen der dünn besetzten Matrix unter den übrigen Reihen der dünn besetzten Matrix zugewiesen werden, so dass die Anzahl von der CPU oder dem zumindest einen Kern (C1 - C4) zugewiesenen Reihen gleich der berechneten Gesamtzahl von Reihen ist.

11. Auslastungsverteilungs-Controller nach einem der Ansprüche 7 bis 10, weiter umfassend:

ein Monitormodul (560), das eingerichtet ist, um eine Differenz zwischen der Zeit, die von dem ersten Prozessor (Accel-1) in Anspruch genommen wird, um die SPMV-Routine unter Verwendung seiner jeweiligen Gesamtzahl von Reihen der dünn besetzten Matrix auszuführen, und der Zeit zu bestimmen, die die Zeit umfasst, die durch den zweiten Prozessor (C1 - C4) in Anspruch genommen wird, um die SPMV-Routine unter Verwendung seiner jeweiligen Gesamtzahl von Reihen der dünn besetzten Matrix auszuführen; und

ein Auslösermodul (550), das eingerichtet ist, um die bestimmte Differenz mit einer Schwelle zu vergleichen und, falls die Differenz die Schwelle übersteigt, den Auslastungsverteiler-Controller (500) zu veranlassen, die Verteilung der Auslastung zwischen den ersten und zweiten Prozessoren zu steuern, so dass die Differenz auf unter die Schwelle abnimmt.

12. Auslastungsverteilungs-Controller nach Anspruch 8 oder Anspruch 9 oder einem der Ansprüche 10 und 11, wenn letztendlich von Anspruch 8 oder Anspruch 9 abhängig, weiter umfassend:

ein Matrixpartitionierungsmodul (510), das betreibbar ist, um die dünn besetzte Matrix in Sätze von Reihen zu partitionieren und die Multiplikation jedes Satzes von Reihen mit dem Vektor unter Verwendung der SPMV-Routine einem jeweiligen Message-Passing-Interface (MPI)-Prozess einer Vielzahl von MPI-Prozessoren zuzuordnen, wobei jeder MPI-Prozess auf jeweiligen solchen ersten und zweiten Prozessoren implementiert ist, die operativ miteinander verbunden sind, wobei der erste Prozessor einen Accelerator (Accel-1) umfasst und der zweite Prozessor eine CPU oder zumindest einen Kern (C1 - C4) einer Multikern-CPU (CPU-1) umfasst, wobei das Leistungsvergleichsmodul (520) eingerichtet ist, um:

die erste Ausführungszeit zu bestimmen, indem eine Zeit bestimmt wird, die von dem Accelerator (Accel-1) in jedem MPI-Prozess in Anspruch genommen wird, um die SPMV-Routine unter Verwendung des Vektors und zumindest einiger der Reihen der dünn besetzten Matrix auszuführen, die diesem MPI-Prozess

22

zugeordnet wurden, und ein Maximum, ein Minimum oder ein Durchschnitt der bestimmten Ausführungszeiten als die erste Ausführungszeit ausgewählt wird;

die zweite Ausführungszeit zu bestimmen, indem die Zeit bestimmt wird, die von der CPU oder dem zumindest einen Kern (C1 - C4) in jedem MPI-Prozess in Anspruch genommen wird, um die SPMV-Routine unter Verwendung des Vektors und zumindest einiger der Reihen der dünn besetzten Matrix, die diesem MPI-Prozess zugeordnet wurden, auszuführen, und ein Maximum, ein Minimum oder ein Durchschnitt der bestimmten Ausführungszeiten als die zweite Ausführungszeit ausgewählt wird;

die Kommunikationszeit bestimmt wird, indem für jeden der MPI-Prozesse eine Kommunikationszeit bestimmt wird, die eine Zeit angibt, die erforderlich ist, um Daten für die SPMV-Routine zwischen dem Accelerator (Accel-1) und der CPU oder dem zumindest einen Kern (C1 - C4) zu kommunizieren, und ein Maximum der bestimmten Zeiten als die Kommunikationszeit ausgewählt wird; und

wobei der Auslastungsverteilungs-Rechner (530) eingerichtet ist, um die jeweiligen Gesamtzahlen der Reihen der dünn besetzten Matrix für jeden der MPI-Prozesse zu berechnen, und das Matrixreihen-Zuweisungsmodul (540) eingerichtet ist, um die jeweiligen Reihen der dünn besetzten Matrix für jeden der MPI-Prozesse zuzuweisen.

13. Datenverarbeitungssystem (100), umfassend:

einen ersten Prozessor (Accel-1) und einen zweiten Prozessor (C1 - C4), die jeweils eingerichtet sind, um eine Routine einer Vektormultiplikation mit dünn besetzter Matrix, SPMV, auszuführen; und

einen Auslastungsverteilungs-Controller (500) nach einem der Ansprüche 7 bis 12, der eingerichtet ist, um eine Verteilung, zwischen dem ersten Prozessor und dem zweiten Prozessor, der Auslastung beim Multiplizieren der dünn besetzten Matrix mit dem Vektor unter Verwendung der von jedem der Prozessoren ausgeführten SPMV-Routine zu steuern.

14. Computerlesbares Speichermedium (650), das Computerprogrammanweisungen speichert, welche, wenn sie von einem Prozessor (610) ausgeführt werden, den Prozessor (610) veranlassen, ein Verfahren nach zumindest einem der Ansprüche 1 bis 6 dargelegt durchzuführen.

## Revendications

1. Procédé de commande d'une distribution, entre un premier processeur (Accel-1) et un second processeur (C1-C4), d'une charge de travail en multipliant une matrice creuse par un vecteur à l'aide d'une routine de multiplication de vecteur de matrice creuse, SPMV, exécutée par chacun des processeurs, le procédé comprenant :

la détermination (S21, S22) d'un premier temps d'exécution et d'un deuxième temps d'exécution indiquant des temps pris respectivement par les premier et second processeurs pour exécuter la routine SPMV à l'aide du vecteur et d'au moins quelques-unes des lignes de la matrice creuse ;

le calcul (S25), sur la base des premier et deuxième temps d'exécution déterminés, de nombres totaux respectifs des lignes de la matrice creuse qui doivent être multipliés avec le vecteur par les premier et second processeurs de sorte que le temps pris par le premier processeur (Accel-1) pour exécuter la routine SPMV à l'aide de son nombre total respectif de lignes de la matrice creuse soit sensiblement égal à un temps comprenant le temps pris par le second processeur (C1-C4) pour exécuter la routine SPMV à l'aide de son nombre total respectif de lignes de la matrice creuse ; et

l'attribution (S26), sur la base des nombres calculés de lignes, de lignes respectives de la matrice creuse aux premier et second processeurs pour multiplication par le vecteur,

**caractérisé en ce que** les lignes respectives de la matrice creuse sont attribuées aux premier et second processeurs pour multiplication par le vecteur par l'attribution à un seul des premier et second processeurs de lignes de la matrice creuse dont un traitement nécessiterait une communication entre les premier et second processeurs s'il était exécuté par l'autre processeur et, si le nombre de lignes ainsi attribuées audit seul processeur n'atteint pas le nombre total de lignes calculé pour ledit seul processeur, l'attribution audit seul processeur de lignes de la matrice creuse parmi les lignes restantes de la matrice creuse de sorte que le nombre de lignes attribuées audit processeur égale le nombre total de lignes calculé pour ce processeur.

2. Procédé selon la revendication 1, comprenant en outre :

la détermination (S24) d'un temps de communication indiquant un temps requis pour communiquer des données pour la routine SPMV entre les premier et second processeurs via un canal de communication (PCIe, 300), dans lequel les nombres totaux respectifs des lignes de la matrice creuse qui doivent être multipliés avec le vecteur par les premier et second processeurs sont calculés (S25), sur la base des premier et deuxième temps d'exécution déterminés et du temps de communication déterminé, de sorte que le temps pris par le premier processeur (Accel-1) pour exécuter la routine SPMV à l'aide de son nombre total respectif de lignes de la matrice creuse soit sensiblement égal à un temps comprenant la somme du temps pris par le second processeur (C1-C4) pour exécuter la routine SPMV à l'aide de son nombre total respectif de lignes de la matrice creuse et d'un temps de communication requis pour communiquer, entre les premier et second processeurs, des données comprenant des résultats des exécutions de la routine SPMV.

3. Procédé selon la revendication 2, dans lequel le procédé est réalisé pour commander la distribution de la charge de travail entre un premier processeur comprenant un accélérateur (Accel-1) et un second processeur comprenant une CPU ou au moins un coeur (C1-C4) d'une CPU multicoeur (CPU-1) qui sont agencés pour résoudre par itération un système d'équations linéaires creuses en tant que partie d'un calcul d'analyse d'éléments finis à l'aide d'un modèle de multiples objets ayant un contact mécanique entre eux, et
dans lequel :

des conditions limites de contact pour les objets dans le modèle sont spécifiées dans une matrice de contact ;
un troisième temps d'exécution indiquant un temps pris par la CPU ou par le au moins un coeur (C1-C4) pour traiter les une ou plusieurs lignes de la matrice de contact à l'aide de la routine SPMV est déterminé (S23) à l'aide d'une ou plusieurs lignes de la matrice de contact ;
les nombres totaux respectifs des lignes de la matrice creuse qui doivent être multipliés avec le vecteur par l'accélérateur (Accel-1) et par la CPU ou par le au moins un coeur (C1-C4) sont calculés (S25), sur la base des premier, deuxième et troisième temps d'exécution déterminés et du temps de communication déterminé, de sorte que le temps pris par l'accélérateur (Accel-1) pour exécuter la routine SPMV à l'aide de son nombre total respectif de lignes de la matrice creuse soit sensiblement égal à la somme du temps pris par la CPU ou par le au moins un coeur (C1-C4) pour exécuter la routine SPMV à l'aide de son nombre total respectif de lignes de la matrice creuse, du temps pris par la CPU ou par le au moins un coeur (C1-C4) pour exécuter la routine SPMV à l'aide de la matrice de contact et d'un temps de communication requis pour communiquer, entre l'accélérateur (Accel-1) et la CPU ou le au moins un coeur (C1-C4), des données comprenant des résultats des exécutions de la routine SPMV ; et
sur la base des nombres totaux calculés des lignes de la matrice creuse, des lignes respectives de la matrice creuse sont attribuées (S26) à l'accélérateur (Accel-1) et à la CPU ou au au moins un coeur (C1-C4) pour multiplication par le vecteur, la matrice de contact étant attribuée (S27) à la CPU ou au au moins un coeur (C1-C4) pour traitement.

4. Procédé selon une quelconque revendication précédente, dans lequel le premier processeur comprend un accélérateur (Accel-1) et le second processeur comprend une CPU ou au moins un coeur (C1-C4) d'une CPU multicoeur (CPU-1), et l'attribution (S26) de lignes de la matrice creuse aux premier et second processeurs pour multiplication par le vecteur comprend l'attribution à la CPU ou au au moins un coeur (C1-C4) de lignes de la matrice creuse dont un traitement, s'il était exécuté par l'accélérateur (Accel-1), nécessiterait une communication entre l'accélérateur (Accel-1) et un second accélérateur (Accel-2 ; Accel-3) via la CPU ou via le au moins un coeur (C1-C4) et, si le nombre de lignes ainsi attribuées à la CPU ou au au moins un coeur (C1-C4) n'atteint pas le nombre total calculé de lignes, l'attribution à la CPU ou au au moins un coeur (C1-C4) de lignes de la matrice creuse parmi les lignes restantes de la matrice creuse de sorte que le nombre de lignes attribuées à la CPU ou au au moins un coeur (C1-C4) égale le nombre total calculé de lignes.

5. Procédé selon une quelconque revendication précédente, comprenant en outre :

la détermination (S40) d'une différence entre le temps pris par le premier processeur (Accel-1) pour exécuter la routine SPMV à l'aide de son nombre total respectif de lignes de la matrice creuse et le temps comprenant le temps pris par le second processeur (C1-C4) pour exécuter la routine SPMV à l'aide de son nombre total respectif de lignes de la matrice creuse ; et
la comparaison de la différence déterminée à un seuil et, si la différence excède le seuil, la répétition du procédé (S20) de commande de la distribution de la charge de travail entre les premier et second processeurs.

6. Procédé selon la revendication 2 ou la revendication 3, ou l'une quelconque des revendications 4 et 5 lorsqu'elles dépendent en fin de compte de la revendication 2 ou de la revendication 3, comprenant en outre :

le partitionnement (S10) de la matrice creuse en des ensembles de lignes et l'affectation de la multiplication de chaque ensemble de lignes par le vecteur à l'aide de la routine SPMV à un processus d'interface de passage de message, MPI, respectif d'une pluralité de processus MPI, chaque processus MPI étant mis en oeuvre sur de tels premier et second processeurs respectifs qui sont connectés l'un à l'autre de manière fonctionnelle, dans lequel le premier processeur comprend un accélérateur (Accel-1) et le second processeur comprend une CPU ou au moins un coeur (C1-C4) d'une CPU multicoeur (CPU-1), et dans lequel :

la détermination (S21) du premier temps d'exécution comprend la détermination d'un temps pris par l'accélérateur (Accel-1) dans chaque processus MPI pour exécuter la routine SPMV à l'aide du vecteur et d'au moins quelques-unes des lignes de la matrice creuse affectées à ce processus MPI, et la sélection d'un maximum, d'un minimum ou d'une moyenne des temps d'exécution déterminés en tant que premier temps d'exécution ;

la détermination (S22) du deuxième temps d'exécution comprend la détermination du temps pris par la CPU ou par le au moins un coeur (C1-C4) dans chaque processus MPI pour exécuter la routine SPMV à l'aide du vecteur et d'au moins quelques-unes des lignes de la matrice creuse affectées à ce processus MPI, et la sélection d'un maximum, d'un minimum ou d'une moyenne des temps d'exécution déterminés en tant que deuxième temps d'exécution ;

la détermination (S24) du temps de communication comprend la détermination, pour chacun des processus MPI, d'un temps de communication indiquant un temps requis pour communiquer des données pour la routine SPMV entre l'accélérateur (Accel-1) et la CPU ou le au moins un coeur (C1-C4), et la sélection d'un maximum des temps déterminés en tant que temps de communication ; et

le calcul (S25) des nombres totaux respectifs des lignes de la matrice creuse et l'attribution (26) de lignes sont réalisés pour chacun des processus MPI.

7. Dispositif de commande de distribution de charge de travail (500) pour commander une distribution, entre un premier processeur (Accel-1) et un second processeur (C1-C4), d'une charge de travail par multiplication d'une matrice creuse par un vecteur à l'aide d'une routine SPMV (routine de multiplication de vecteur de matrice creuse) exécutée par chacun des processeurs, le dispositif de commande de distribution de charge de travail (500) comprenant :

un module d'évaluation comparative (520) agencé pour déterminer un premier temps d'exécution et un deuxième temps d'exécution indiquant des temps pris respectivement par les premier et second processeurs pour exécuter la routine SPMV à l'aide du vecteur et d'au moins quelques-unes des lignes de la matrice creuse ;

un calculateur de distribution de charge de travail (530) agencé pour calculer, sur la base des premier et deuxième temps d'exécution déterminés, des nombres totaux respectifs des lignes de la matrice creuse qui doivent être multipliés avec le vecteur par les premier et second processeurs de sorte que le temps pris par le premier processeur (Accel-1) pour exécuter la routine SPMV à l'aide de son nombre total respectif de lignes de la matrice creuse est sensiblement égal à un temps comprenant le temps pris par le second processeur (C1-C4) pour exécuter la routine SPMV à l'aide de son nombre total respectif de lignes de la matrice creuse ; et

un module d'attribution de lignes de matrice (540) utilisable pour attribuer, sur la base des nombres calculés de lignes, des lignes respectives de la matrice creuse aux premier et second processeurs pour multiplication par le vecteur,

**caractérisé en ce que** le module d'attribution de lignes de matrice (540) est utilisable pour attribuer les lignes respectives de la matrice creuse aux premier et second processeurs pour multiplication par le vecteur par l'attribution à un seul des premier et second processeurs de lignes de la matrice creuse dont une traitement nécessiterait une communication entre les premier et second processeurs s'il était exécuté par l'autre processeur et, si le nombre de lignes ainsi attribuées audit seul processeur n'atteint pas le nombre total de lignes calculées pour ledit seul processeur, l'attribution audit seul processeur de lignes de la matrice creuse parmi les lignes restantes de la matrice creuse de sorte que le nombre de lignes attribuées audit processeur égale le nombre total de lignes calculées pour ce processeur.

8. Dispositif de commande de distribution de charge de travail selon la revendication 7, dans lequel :

le module d'évaluation comparative (520) est en outre agencé pour déterminer un temps de communication indiquant un temps requis pour communiquer des données pour la routine SPMV entre les premier et second processeurs via un canal de communication (PCIe, 300) ; et

le calculateur de distribution de charge de travail (530) est agencé pour calculer, sur la base des premier et deuxième temps d'exécution déterminés et du temps de communication déterminé, les nombres totaux respectifs de lignes de la matrice creuse qui doivent être multipliés avec le vecteur par les premier et second processeurs de sorte que le temps pris par le premier processeur (Accel-1) pour exécuter la routine SPMV à l'aide de son nombre total respectif de lignes de la matrice creuse est sensiblement égal à un temps comprenant la somme du temps pris par le second processeur (C1-C4) pour exécuter la routine SPMV à l'aide de son nombre total respectif de lignes de la matrice creuse et d'un temps de communication requis pour communiquer, entre les premier et second processeurs, des données comprenant des résultats des exécutions de la routine SPMV.

9. Dispositif de commande de distribution de charge de travail selon la revendication 8, agencé pour commander la distribution de la charge de travail entre un premier processeur comprenant un accélérateur (Accel-1) et un second processeur comprenant une CPU ou au moins un coeur (C1-C4) d'une CPU multicoeur (CPU-1) qui sont agencés pour résoudre par itération un système d'équations linéaires creuses en tant que partie d'un calcul d'analyse d'éléments finis à l'aide d'un modèle de multiples objets ayant un contact mécanique entre eux, dans lequel :

des conditions limites de contact pour les objets dans le modèle sont spécifiées dans une matrice de contact ; le module d'évaluation comparative (520) est en outre utilisable pour déterminer un troisième temps d'exécution indiquant un temps pris par la CPU ou par le au moins un coeur (C1-C4) pour traiter une ou plusieurs lignes de la matrice de contact à l'aide de la routine SPMV ; le calculateur de distribution de charge de travail (530) est agencé pour calculer, sur la base des premier, deuxième et troisième temps d'exécution déterminés et du temps de communication déterminé, les nombres totaux respectifs des lignes de la matrice creuse qui doivent être multipliés avec le vecteur par l'accélérateur (Accel-1) et par la CPU ou par le au moins un coeur (C1-C4) de sorte que le temps pris par l'accélérateur (Accel-1) pour exécuter la routine SPMV à l'aide de son nombre total respectif de lignes de la matrice creuse soit sensiblement égal à la somme du temps pris par la CPU ou par le au moins un coeur (C1-C4) pour exécuter la routine SPMV à l'aide de son nombre total respectif de lignes de la matrice creuse, du temps pris par la CPU ou par le au moins un coeur (C1-C4) pour exécuter la routine SPMV à l'aide de la matrice de contact et d'un temps de communication requis pour communiquer, entre l'accélérateur (Accel-1) et la CPU ou le au moins un coeur (C1-C4), des données comprenant des résultats des exécutions de la routine SPMV ; et le module d'attribution de lignes de matrice (540) est utilisable pour attribuer, sur la base des nombres totaux calculés des lignes de la matrice creuse, des lignes respectives de la matrice creuse à l'accélérateur (Accel-1), et à la CPU ou au au moins un coeur (C1-C4), pour multiplication par le vecteur, le module d'attribution de lignes de matrice (540) étant en outre utilisable pour attribuer la matrice de contact à la CPU ou au au moins un coeur (C1-C4) pour de traitement.

10. Dispositif de commande de distribution de charge de travail selon l'une quelconque des revendications 7, 8 et 9, dans lequel le premier processeur comprend un accélérateur (Accel-1) et le second processeur comprend une CPU ou au moins un coeur (C1-C4) d'une CPU multicoeur (CPU-1), et le module d'attribution de lignes de matrice (540) est agencé pour attribuer des lignes de la matrice creuse aux premier et second processeurs par l'attribution à la CPU ou au au moins un coeur (C1-C4) de lignes de la matrice creuse dont un traitement, s'il était exécuté par l'accélérateur (Accel-1), nécessiterait une communication entre l'accélérateur (Accel-1) et un second accélérateur (Accel-2; Accel-3) via la CPU ou via le au moins un coeur (C1-C4) et, si le nombre de lignes ainsi attribuées à la CPU ou au au moins un coeur (C1-C4) n'atteint pas le nombre total calculé de lignes, l'attribution à la CPU ou au au moins un coeur de lignes de la matrice creuse parmi les lignes restantes de la matrice creuse de sorte que le nombre de lignes attribuées à la CPU ou au au moins un coeur (C1-C4) égale le nombre total calculé de lignes.

11. Dispositif de commande de distribution de charge de travail selon l'une quelconque des revendications 7 à 10, comprenant en outre :

un module de surveillance (560) agencé pour déterminer une différence entre le temps pris par le premier processeur (Accel-1) pour exécuter la routine SPMV à l'aide de son nombre total respectif de lignes de la matrice creuse et le temps comprenant le temps pris par le second processeur (C1-C4) pour exécuter la routine SPMV à l'aide de son nombre total respectif de lignes de la matrice creuse ; et un module de déclenchement (550) agencé pour comparer la différence déterminée à un seuil et, si la différence excède le seuil, amener le dispositif de commande de distribution de charge de travail (500) à commander la distribution de la charge de travail entre les premier et second processeurs de sorte que la différence diminue en dessous dudit seuil.

**12.** Dispositif de commande de distribution de charge de travail selon la revendication 8 ou la revendication 9, ou l'une quelconque des revendications 10 et 11 lorsqu'elles dépendent en fin de compte de la revendication 8 ou de la revendication 9, comprenant en outre :

un module de partitionnement de matrice (510) utilisable pour partitionner la matrice creuse en des ensembles de lignes et affecter la multiplication de chaque ensemble de lignes par le vecteur à l'aide de la routine SPMV à un processus d'interface de passage de message, MPI, respectif d'une pluralité de processus MPI, chaque processus MPI étant mis en oeuvre sur de tels premier et second processeurs respectifs qui sont connectés l'un à l'autre de manière fonctionnelle, dans lequel le premier processeur comprend un accélérateur (Accel-1) et le second processeur comprend une CPU ou au moins un coeur (C1-C4) d'une CPU multicoeur (CPU-1), dans lequel le module d'évaluation comparative (520) est agencé pour :

déterminer le premier temps d'exécution par la détermination d'un temps pris par l'accélérateur (Accel-1) dans chaque processus MPI pour exécuter la routine SPMV à l'aide du vecteur et d'au moins quelques-unes des lignes de la matrice creuse affectées à ce processus MPI, et la sélection d'un maximum, d'un minimum ou d'une moyenne des temps d'exécution déterminés en tant que premier temps d'exécution ;
déterminer le deuxième temps d'exécution par la détermination du temps pris par la CPU ou par le au moins un coeur (C1-C4) dans chaque processus MPI pour exécuter la routine SPMV à l'aide du vecteur et d'au moins quelques-unes des lignes de la matrice creuse affectées à ce processus MPI, et la sélection d'un maximum, d'un minimum ou d'une moyenne des temps d'exécution déterminés en tant que deuxième temps d'exécution ;
déterminer le temps de communication par la détermination, pour chacun des processus MPI, d'un temps de communication indiquant un temps requis pour communiquer des données pour la routine SPMV entre l'accélérateur (Accel-1) et la CPU ou le au moins un coeur (C1-C4), et la sélection d'un maximum des temps déterminés en tant que temps de communication ; et
dans lequel le calculateur de distribution de charge de travail (530) est agencé pour calculer les nombres totaux respectifs des lignes de la matrice creuse pour chacun des processus MPI, et le module d'attribution de lignes de matrice (540) est agencé pour attribuer les lignes respectives de la matrice creuse pour chacun des processus MPI.

**13.** Système de traitement de données (100) comprenant :

un premier processeur (Accel-1) et un second processeur (C1-C4) agencés chacun pour exécuter une routine de multiplication de vecteur de matrice creuse, SPMV ; et
un dispositif de commande de distribution de charge de travail (500) selon l'une quelconque des revendications 7 à 12 agencé pour commander une distribution, entre le premier processeur et le second processeur, de la charge de travail en multipliant la matrice creuse par le vecteur à l'aide de la routine SPMV exécutée par chacun des processeurs.

**14.** Support de stockage lisible par ordinateur (650) stockant des instructions de programme informatique qui, lorsqu'elles sont exécutées par un processeur (610), amènent le processeur (610) à réaliser un procédé tel qu'il est présenté dans au moins une des revendications 1 à 6.

Fig. 1

EP 2 657 842 B1

540 — Matrix Row Assignment Module

530 — Workload Distribution Calculator

540 — Matrix Row Assignment Module

560 — Monitor Module

520 — Benchmarking Module

550 — Trigger Module

510 — Matrix-partitioning Module

Workload Distribution Controller
500

FIG. 2

Fig. 3

Fig. 4

```
        ╭────────────────────────────────╮
        │      S30: Optimize             │
        │   workload distribution        │
        ╰────────────────────────────────╯
                       │
                       ▼
┌──────────────────────────────────────────────┐
│    Determine the time taken by the accelerator in │      S21
│      each MPI process to execute the SPMV routine  │
│   using at least some of the allocated matrix rows, │
│    and determine a max, min or average of the times │
└──────────────────────────────────────────────┘
                       │
                       ▼
┌──────────────────────────────────────────────┐
│    Determine the time taken by the CPU cores in │      S22
│      each MPI process to execute the SPMV routine  │
│   using at least some of the allocated matrix rows, │
│    and determine a max, min or average of the times │
└──────────────────────────────────────────────┘
                       │
                       ▼
┌──────────────────────────────────────────────┐
│    Determine the time taken by the CPU cores in │      S23
│   each MPI process to process one or more allocated │
│    rows of the contact matrix, and determine a max, │
│           min or average of the times              │
└──────────────────────────────────────────────┘
                       │
                       ▼
┌──────────────────────────────────────────────┐
│    Determine, for each MPI process, the times  │      S24
│  required to communicate data for the SPMV routine │
│       between the accelerator and CPU cores, and   │
│       between that MPI process and any other MPI   │
│   processes, and determine a maximum of the times  │
└──────────────────────────────────────────────┘
                       │
                       ▼
┌──────────────────────────────────────────────┐
│    Calculate respective total numbers of the rows │      S25
│    of the system matrix that are to be multiplied  │
│    with the vector by the accelerator and the CPU  │
│    cores in each MPI process using the determined   │
│   max, min or average times determined in S21-S24  │
└──────────────────────────────────────────────┘
                       │
                       ▼
┌──────────────────────────────────────────────┐
│    Assign respective rows from among the allocated │      S26
│   rows of the system matrix to the accelerator and │
│       CPU cores in each MPI process, based on the   │
│              calculation in S25                     │
└──────────────────────────────────────────────┘
                       │
                       ▼
┌──────────────────────────────────────────────┐
│    Assign contact matrix to the CPU cores for  │      S27
│                  processing                     │
└──────────────────────────────────────────────┘
                       │
                       ▼
        ╭────────────────────────────────╮
        │            Return              │
        ╰────────────────────────────────╯
```

Fig. 5

```
        ╭─────────────────────────╮
        │      S30: Optimize      │
        │  workload distribution  │
        ╰─────────────────────────╯
                     │
                     ▼
        ┌─────────────────────────┐
        │      Set i = 0          │──── S20'
        └─────────────────────────┘
                     │
                     ▼
  ┌──────────────────────────────────────────┐
  │ Determine the average time taken by the  │
  │ accelerator in ith MPI process to execute│──── S21'
  │ the SPMV routine using at least some of   │
  │ the allocated matrix rows                 │
  └──────────────────────────────────────────┘
                     │
                     ▼
  ┌──────────────────────────────────────────┐
  │ Determine the average time taken by the  │
  │ CPU cores in the ith MPI process to       │──── S22'
  │ execute the SPMV routine using at least   │
  │ some of the allocated matrix rows         │
  └──────────────────────────────────────────┘
                     │
                     ▼
  ┌──────────────────────────────────────────┐
  │ Determine the average time taken by the  │
  │ CPU cores in the ith MPI process to       │──── S23'
  │ process one or more allocated rows of the │
  │ contact matrix                            │
  └──────────────────────────────────────────┘
                     │
                     ▼
  ┌──────────────────────────────────────────┐
  │ Determine, for the ith MPI process, the  │
  │ times required to communicate data for    │──── S24'
  │ the SPMV routine between the accelerator  │
  │ and CPU cores and between that MPI process│
  │ and any other MPI processes               │
  └──────────────────────────────────────────┘
                     │
                     ▼
  ┌──────────────────────────────────────────┐
  │ Calculate respective total numbers of the│
  │ rows of the system matrix that are to be  │
  │ multiplied with the vector by the         │──── S25'
  │ accelerator and the CPU cores in the ith  │
  │ MPI process using the times determined in │
  │ S21'-S24'                                 │
  └──────────────────────────────────────────┘
                     │
                     ▼
  ┌──────────────────────────────────────────┐
  │ Assign respective rows from among the    │
  │ allocated rows of the system matrix to the│──── S26'
  │ accelerator and CPU cores in the ith MPI  │
  │ process, based on the calculation in S25' │
  └──────────────────────────────────────────┘
                     │
                     ▼
  ┌──────────────────────────────────────────┐
  │ Assign contact matrix to the CPU cores   │──── S27'
  │ for processing                            │
  └──────────────────────────────────────────┘
                     │
         S29'        ▼         S28'
  ┌─────────┐     ◇─────────◇          ╭──────────╮
  │ i = i+1 │◄────│ i = 11 ?│──── Yes ─►│  Return  │
  └─────────┘     ◇─────────◇          ╰──────────╯
        No
```

Fig. 6

## Fig. 7

**Problem data**

| | |
|---|---|
| Matrix order (N) = | 1000000 rows |
| Word size (precision) = | 8 bytes |

**Machine data**

| | |
|---|---|
| Accel. SPMV perform. = | 10 GFLOP/s |
| CPU. SPMV perform. = | 5 GFLOP/s |
| PCIe bandwidth = | 4000 MB/s |
| Network bandwidth = | 500 MB/s |

**Derived data**

| | |
|---|---|
| Matrix nonzeros | 7000000 elements |
| Communication size | 0.152588 MB |

**Benchmark data (simulated)**

| | |
|---|---|
| $T_{CPU,SPMV,row}=$ | 2.8E-09 sec |
| $T_{Accel,SPMV,row}=$ | 1.4E-09 sec |
| $T_{CPU2Accel}=$ | 3.8147E-05 sec |
| $T_{Accel2CPU}=$ | 3.8147E-05 sec |
| $T_{Network}=$ | 0.000305176 sec |

**Decide the size of the augmentation set**

| | |
|---|---|
| $T_{COMM}=$ | 0.00038147 sec |
| ALPHA= | 0.757492792 |
| Aug. set size (S) = | 242507 rows |

**Time spent and load balance**

| | |
|---|---|
| Time on Accel | 0.00106 sec |
| Time on CPU | 0.000679 sec |
| Time on CPU + comm | 0.00106 sec |
| Total time spent | 0.00106 sec |
| Load imbalance | 0 sec |

**Speedup vs. state of the art**

| | |
|---|---|
| Time using this invention | 0.00106 sec |
| Time for state of the art | 0.001372 sec |
| Speedup | 1.293742 |

## Fig. 8

**Problem data**

| | |
|---|---|
| Matrix order (N) = | 1000000 rows |
| Word size (precision) = | 8 bytes |

**Machine data**

| | |
|---|---|
| Accel. SPMV perform. = | 10 GFLOP/s |
| CPU. SPMV perform. = | 10 GFLOP/s |
| PCIe bandwidth = | 4000 MB/s |
| Network bandwidth = | 500 MB/s |

**Derived data**

| | |
|---|---|
| Matrix nonzeros | 7000000 elements |
| Communication size | 0.152588 MB |

**Benchmark data (simulated)**

| | |
|---|---|
| $T_{CPU,SPMV,row}=$ | 1.4E-09 sec |
| $T_{Accel,SPMV,row}=$ | 1.4E-09 sec |
| $T_{CPU2Accel}=$ | 3.8147E-05 sec |
| $T_{Accel2CPU}=$ | 3.8147E-05 sec |
| $T_{Network}=$ | 0.000305176 sec |

**Decide the size of the augmentation set**

| | |
|---|---|
| $T_{COMM}=$ | 0.00038147 sec |
| ALPHA= | 0.636239188 |
| Aug. set size (S) = | 363760 rows |

**Time spent and load balance**

| | |
|---|---|
| Time on Accel | 0.000891 sec |
| Time on CPU | 0.000509 sec |
| Time on CPU + comm | 0.000891 sec |
| Total time spent | 0.000891 sec |
| Load imbalance | 0 sec |

**Speedup vs. state of the art**

| | |
|---|---|
| Time using this invention | 0.000891 sec |
| Time for state of the art | 0.001372 sec |
| Speedup | 1.540301 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. LEE ; R. EIGENMANN.** Adaptive Runtime Tuning of Parallel Sparse Matrix-Vector Multiplication on Distributed Memory Systems. *Proceedings of the 2008 ACM International Conference on Supercomputing,* 195-204